# EUROPEAN PATENT APPLICATION

(11) **EP 4 033 339 A1**
(43) Date of publication of application: **27.07.2022**
(21) Application number: 20878813.3
(22) Date of filing: 12.10.2020
(51) Int. Cl.: G06F 3/0481

(54) **USER INTERFACE DISPLAY METHOD AND ELECTRONIC DEVICE**

(30) Priority: 23.10.2019 CN 201911013279
(71) Applicant: Huawei Technologies Co., Ltd., Longgang District Shenzhen, Guangdong 518129 (CN)
(72) Inventor: ZHAO, Xiaohu, Shenzhen, Guangdong 518129 (CN); ZHENG, Aihua, Shenzhen, Guangdong 518129 (CN); TONG, Bifeng, Shenzhen, Guangdong 518129 (CN); CHEN, Xiaoxiao, Shenzhen, Guangdong 518129 (CN); MA, Yuchi, Shenzhen, Guangdong 518129 (CN); TE, Rigele, Shenzhen, Guangdong 518129 (CN)
(74) Representative: Pfenning, Meinig & Partner mbB
(86) International application number: PCT/CN2020/120411
(87) International publication number: WO 2021/078032

(57) **Abstract**

A user interface display method and an electronic device are provided. In the method, when an electronic device displays an interactive interface element in an unreachable area of a display, the electronic device may display the interactive interface element in a reachable area of the display in response to a gesture entered by a user on the display. This method can ensure that the user conveniently interacts with the interactive interface element in the reachable area with one hand, thereby improving convenience of controlling the electronic device with one hand.

## Description

This application claims priority to Chinese Patent Application No. 201911013279.6, filed with the China National Intellectual Property Administration on October 23, 2019 and entitled "USER INTERFACE DISPLAY METHOD AND ELECTRONIC DEVICE", which is incorporated herein by reference in its entirety.

### TECHNICAL FIELD

This application relates to the field of terminal technologies, and in particular, to a user interface display method and an electronic device.

### BACKGROUND

As intelligent terminal technologies rapidly develop, sizes of displays of electronic devices are increasingly large. For example, many mobile phones are configured with a display of 5 inches or more than 5 inches, and many tablet computers are configured with a display of 10 inches or more than 10 inches.

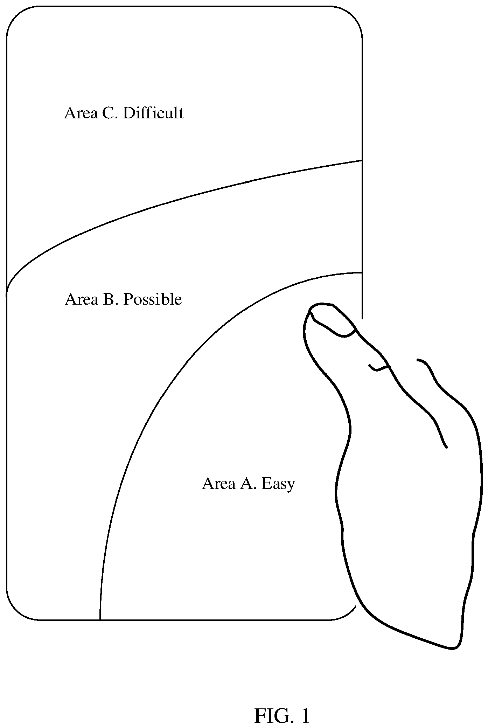

An electronic device with a large display can bring better visual experience to a user, but also brings a great challenge for the user to operate the electronic device with one hand. As shown in FIG. 1, when a user holds a mobile phone with a large display with one hand, the entire display of the mobile phone may be divided into three parts based on difficulty of a user operation: A. Easy, B. Possible, and C. Difficult. The area A indicates an area that is most easily touched by a thumb of the user when the user performs operation with one hand, the area B indicates an area that can be but is not easily touched by the thumb of the user when the user performs operation with one hand, and the area C indicates an area that is very difficult to be touched by the thumb of the user when the user performs operation with one hand, that is, when the user operates the mobile phone with one hand, it is difficult for the thumb of the user to touch an interface element displayed in the area C.

Therefore, how to ensure that the user flexibly and conveniently controls interface elements in all the areas of the large display is a research direction in the industry.

### SUMMARY

Embodiments of this application provide a user interface display method and an electronic device, so that a user can conveniently interact with an interactive interface element in a reachable area with one hand, thereby improving convenience of controlling an electronic device with one hand.

According to a first aspect, an embodiment of this application provides a user interface display method. The method may include: An electronic device displays a user interface on a display, where the user interface includes one or more interface elements. When an interactive interface element is displayed in an unreachable area of the display, the electronic device detects a first gesture entered on the display, where the interactive interface element is an interface element that receives and responds to a user operation. The electronic device displays, in a reachable area of the display in response to the first gesture, the interactive interface element displayed in the unreachable area, where the reachable area is an area that can be touched or can be easily touched by a user on the display, and the unreachable area is an area that cannot be touched or cannot be easily touched by the user on the display.

In the method of the first aspect, the interactive interface element is an interface element that can receive and respond to a user operation. The electronic device can provide a corresponding feedback in response to a user operation performed on the interactive interface element, for example, refreshing a currently displayed user interface, jumping to a new user interface, or displaying a pop-up window on a current user interface. The interactive interface element may include, for example, a pop-up window, a dialog box, a button, or a tab.

According to the method of the first aspect, it can be ensured that the user can conveniently interact with the interactive interface element in the reachable area with one hand, thereby improving convenience of controlling the electronic device with one hand.

With reference to the first aspect, in some embodiments, after the electronic device displays in the reachable area of the display in response to the first gesture, the interactive interface element displayed in the unreachable area, the electronic device may further detect a user operation performed on the interactive interface element; and execute, in response to the user operation performed on the interactive interface element, an instruction to implement a function corresponding to the user operation performed on the interactive interface element.

With reference to the first aspect, in some embodiments, the first gesture includes one or more of the following: a continuous sliding gesture that is entered by a finger of the user in a preset area and with a moving distance greater than a threshold, and a touch-and-hold gesture or a heavy press gesture that is entered by a finger of the user in a preset area. The first gesture may be set by default when the electronic device is at delivery, or may be autonomously set by the user.

The preset area includes one or more of the following: an area with a radian on one side or two sides of the display, and a lower left corner area or a lower right corner area of the display. The preset area may be autonomously set by the user based on a habit of the user, or may be set by the electronic device by default. In this way, the electronic device can be conveniently triggered to display, in the reachable area, the interactive interface element originally displayed in the unreachable area.

With reference to the first aspect, in some embodiments, the reachable area may be implemented in the following two manners:
1. The reachable area is determined based on a manner in which the user holds the electronic device.

The electronic device is set as follows: A lower left corner position of the display is used as an origin (0, 0), a direction from left to right of the display is an X-axis direction, and a direction from bottom to top of the display is a Y-axis direction.

Based on the foregoing settings, when the user holds the electronic device with the left hand, the reachable area includes:
an area formed by coordinate points whose X-axis coordinates range from 0 to X0 and whose Y-axis coordinates range from 0 to Y0;
an area formed by coordinate points whose X-axis coordinates range from 0 to X0 and whose Y-axis coordinates range from 0 to Y1; or
an area formed by coordinate points whose X-axis coordinates range from 0 to X1 and whose Y-axis coordinates range from 0 to Y0.

Based on the foregoing settings, when the user holds the electronic device with the right hand, the reachable area includes:
an area formed by coordinate points whose X-axis coordinates range from X0 to X1 and whose Y-axis coordinates range from 0 to Y0;
an area formed by coordinate points whose X-axis coordinates range from X0 to X1 and whose Y-axis coordinates range from 0 to Y1; or
an area formed by coordinate points whose X-axis coordinates range from 0 to X1 and whose Y-axis coordinates range from 0 to Y0, where

X0 is an X-axis coordinate value of a coordinate point to which a fingertip of the user is mapped on the display, Y0 is a Y-axis coordinate value of the coordinate point to which the fingertip of the user is mapped on the display, X1 is a length of the display in the X-axis direction, and Y0 is a length of the display in the Y-axis direction.

2. The reachable area includes a sector area determined by using a projection of a finger of the user on the display as a radius and using a smearing track generated by the finger of the user on the display as an arc.

In this embodiment of this application, the reachable area may be set by the electronic device by default, or may be customized by the user based on a habit of the user.

With reference to the first aspect, in some embodiments, the electronic device moves the interactive interface element towards the reachable area of the display in response to the first gesture, so that the interactive interface element is displayed in the reachable area. In this way, a process of dynamically moving the interactive interface element on the display may be presented to the user, so that the user has more intuitive and effective visual experience.

With reference to the first aspect, in some embodiments, when the interactive interface element displayed in the unreachable area is displayed in the reachable area of the display, one or more of a spacing between the interactive interface elements, a relative display position, or a display size of the interactive interface element are changed. This more satisfies the habit of the user, and may further implement aesthetic display.

With reference to the first aspect, in some embodiments, before detecting the first gesture entered on the display, the electronic device may further output prompt information, where the prompt information is used to prompt the user to enter the first gesture. Specifically, the electronic device may output the prompt information in any one of the following cases:
1. The electronic device may output the prompt information when displaying the interactive interface element in the unreachable area of the display.
2. The electronic device may output the prompt information when displaying the interactive interface element in the unreachable area of the display, and when detecting that the user holds the electronic device with one hand. Herein, the electronic device may detect, by using a disposed pressure sensor, whether the user holds the electronic device with one hand.
3. The electronic device outputs the prompt information when displaying the interactive interface element in the unreachable area of the display, and when detecting that the user holds the electronic device with one hand and determining that the user currently has a requirement for controlling the interactive interface element displayed in the unreachable area. In some embodiments, when detecting that a projection length L1, on the display, of a finger floating above the display exceeds a specified length L2 (for example, L2 is equal to 5 centimeters), the electronic device may determine that the user currently has the requirement for controlling the interactive interface element displayed in the unreachable area.

In a manner of outputting the prompt information, the user can learn that the first gesture can be entered currently to more conveniently control the electronic device, thereby improving use experience of the user.

With reference to the first aspect, in some embodiments, after displaying, in the reachable area of the display in response to the first gesture, the interactive interface element displayed in the unreachable area, the electronic device may further detect a second gesture entered on the display; and restore, in response to the second gesture, the interactive interface element to the unreachable area for display. In this way, the user can conveniently control the electronic device according to a requirement of the user, thereby improving user experience.

In some embodiments, the second gesture may be the same as the first gesture. For details, refer to the foregoing related descriptions of the first gesture. In some other embodiments, the second gesture may be different from the first gesture. For example, the second gesture may alternatively be a tap operation, or a touch operation that is entered by the user in an area other than the interactive interface element in the reachable area.

According to a second aspect, an embodiment of this application provides an electronic device. The electronic device includes one or more processors, and a memory. The memory is coupled to the one or more processors, the memory is configured to store computer program code, the computer program code includes computer instructions, and the one or more processors invoke the computer instructions, so that the electronic device performs the user interface display method according to any one of the first aspect or the implementations of the first aspect.

According to a third aspect, an embodiment of this application provides an electronic device. The electronic device includes one or more function units, configured to correspondingly perform the user interface display method according to any one of the first aspect or the possible implementations of the first aspect.

According to a fourth aspect, an embodiment of this application provides a chip. The chip is applied to an electronic device. The chip includes one or more processors and an interface. The interface is used to receive code instructions and transmit the code instructions to the processor. The processor is configured to run the code instructions, so that the electronic device performs the user interface display method according to any one of the first aspect or the possible implementations of the first aspect.

According to a fifth aspect, an embodiment of this application provides a computer program product including instructions. When the computer program product runs on an electronic device, the electronic device is enabled to perform the user interface display method according to any one of the first aspect or the possible implementations of the first aspect.

According to a sixth aspect, an embodiment of this application provides a computer-readable storage medium, including instructions. When the instructions are run on an electronic device, the electronic device is enabled to perform the user interface display method according to any one of the first aspect or the possible implementations of the first aspect.

In the technical solutions provided in embodiments of this application, when the electronic device displays the interactive interface element in the unreachable area of the display, the electronic device may display, in response to the gesture entered by the user on the display, the interactive interface element in the reachable area of the display. The technical solutions can ensure that the user conveniently interacts with the interactive interface element in the reachable area with one hand, thereby improving convenience of controlling the electronic device with one hand.

### BRIEF DESCRIPTION OF DRAWINGS

FIG. 1 is a schematic diagram of controlling difficulty when a user holds a mobile phone with one hand;
FIG. 2A is a schematic diagram of a hardware structure of an electronic device according to an embodiment of this application;
FIG. 2B is a block diagram of a software architecture of an electronic device according to an embodiment of this application;
FIG. 2C is a schematic diagram of a flowchart in which software modules of an electronic device provided in an embodiment of this application collaboratively implement a user interface display method according to an embodiment of this application;
FIG. 3A to FIG. 3C are a schematic diagram of man-machine interaction according to an embodiment of this application;
FIG. 4A is a schematic diagram of reachable areas when a user holds an electronic device with the right hand according to an embodiment of this application;
FIG. 4B is a schematic diagram of reachable areas when a user holds an electronic device with the left hand according to an embodiment of this application;
FIG. 4C is a schematic diagram of another reachable area according to an embodiment of this application; and
FIG. 5A to FIG. 5D, FIG. 6A to FIG. 6D, FIG. 7A and FIG. 7B, FIG. 8A to FIG. 8D, and FIG. 9A to FIG. 9D are schematic diagrams of man-machine interaction according to embodiments of this application.

### DESCRIPTION OF EMBODIMENTS

The following describes the technical solutions in embodiments of this application with reference to accompanying drawings in embodiments of this application.

In the descriptions in embodiments of this application, unless otherwise provided, "/" means "or". For example, A/B may represent A or B. The term "and/or" in this specification describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more than two.

Terms "first" and "second" below are merely used for description, and shall not be understood as an indication or implication of relative importance or implicit indication of a quantity of indicated technical features. Therefore, a feature restricted by "first " or "second" may explicitly indicate or implicitly include one or more such features. In the descriptions of embodiments of this application, "a plurality of" means two or more than two unless otherwise specified.

Embodiments of this application provide a user interface display method and an electronic device. In the user interface display method, when an electronic device displays an interactive interface element in an unreachable area of a display, the electronic device may display, in response to a gesture entered by a user on the display, the interactive interface element in a reachable area of the display.

The term "user interface" in the specification, claims, and accompanying drawings of this application is a medium interface for interaction and information exchange between an application or an operating system and a user, and implements conversion between an internal form of information and a form that can be accepted by the user. The user interface is usually in a representation form of a graphical user interface (graphical user interface, GUI), which is a user interface that is related to a computer operation and that is displayed in a graphical manner. The graphical user interface may include interface elements such as an icon, a window, and a control displayed on a display of an electronic device. The control may include visible interface elements such as an icon, a button, a menu, a tab, a text box, a dialog box, a status bar, a navigation bar, or a widget.

The reachable area is an area that can be touched or can be easily touched on the display when the user holds the electronic device with one hand. The unreachable area is an area that cannot be touched or cannot be easily touched on the display when the user holds the electronic device with one hand. The unreachable area and the reachable area are described in detail in subsequent embodiments. Details are not described herein.

The interactive interface element is an interface element that can receive and respond to a user operation. The electronic device can provide a corresponding feedback in response to a user operation performed on the interactive interface element, for example, refreshing a currently displayed user interface, jumping to a new user interface, or displaying a pop-up window on a current user interface. The interactive interface element may include, for example, a pop-up window, a dialog box, a button, or a tab.

According to the method provided in embodiments of this application, when the user holds the electronic device with one hand, the user can enter the gesture on the display to trigger the electronic device to display, in the reachable area, the interactive interface element originally displayed in the unreachable area, so as to conveniently interact with the interactive interface element in the reachable area with one hand, thereby improving convenience of controlling the electronic device with one hand.

It may be understood that the method provided in embodiments of this application is applied to the electronic device configured with the display of a large size.

A type of the described electronic device is not specifically limited in this application. The electronic device may be a portable electronic device such as a mobile phone, a tablet computer, a personal digital assistant (personal digital assistant, PDA), or a laptop (laptop). An example embodiment of the portable electronic device includes but is not limited to a portable electronic device using iOS, Android, Microsoft, or another operating system. The portable electronic device may also be another portable electronic device, for example, a laptop (laptop) with a touch-sensitive surface (for example, a touch panel). It should be further understood that, in some other embodiments of this application, the electronic device may alternatively be not a portable electronic device, but a desktop computer with a touch-sensitive surface (for example, a touch panel) or a smart television.

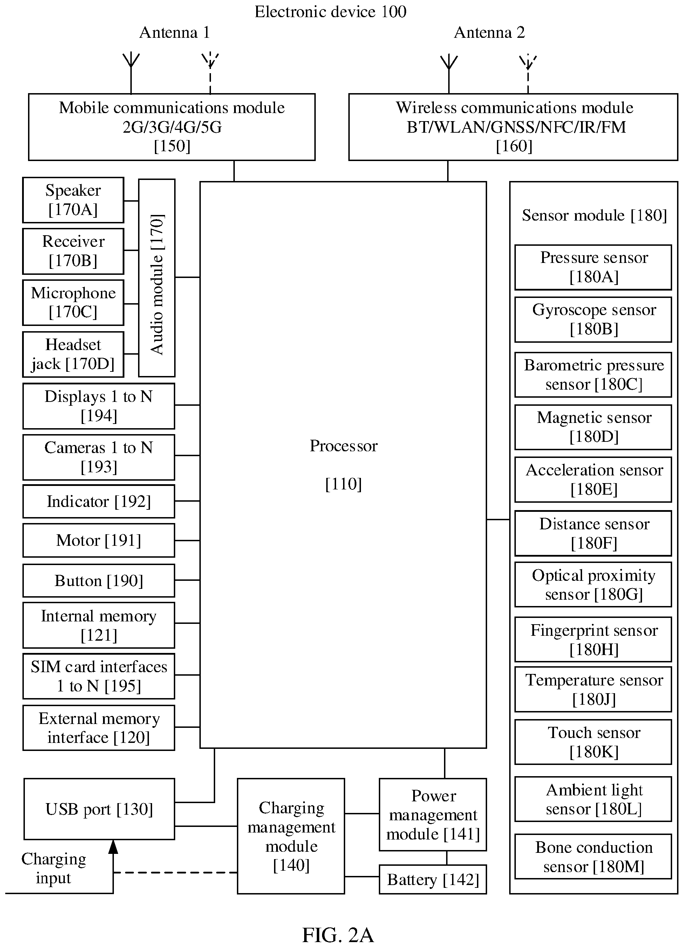

Refer to FIG. 2A. FIG. 2A is a schematic diagram of a structure of an example of an electronic device 100 according to an embodiment of this application.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than the components shown in the figure, some components may be combined, or some components may be split, or different component arrangements may be used. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The controller may generate an operation control signal based on an instruction operation code and a time sequence signal, to control instruction reading and instruction execution.

A memory may be disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access and reduces waiting time of the processor 110. Therefore, system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronous serial bus, including a serial data line (serial data line, SDL) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through an I2C interface, so that the processor 110 communicates with the touch sensor 180K through the I2C bus interface, to implement a touch function of the electronic device 100.

The I2S interface may be used to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communications module 160 through the I2S interface, to implement a function of answering a call by using a Bluetooth headset.

The PCM interface may also be used to perform audio communication, and sample, quantize, and code an analog signal. In some embodiments, the audio module 170 may be coupled to the wireless communications module 160 through a PCM bus interface. In some embodiments, the audio module 170 may alternatively transfer an audio signal to the wireless communications module 160 through the PCM interface, to implement a function of answering a call by using the Bluetooth headset. Both the I2S interface and the PCM interface may be used to perform audio communication.

The UART interface is a universal serial data bus, and is used to perform asynchronous communication. The bus may be a two-way communications bus. The bus switches to-be-transmitted data between serial communication and parallel communication. In some embodiments, the UART interface is usually used to connect the processor 110 to the wireless communications module 160. For example, the processor 110 communicates with a Bluetooth module in the wireless communications module 160 through the UART interface, to implement a Bluetooth function. In some embodiments, the audio module 170 may transfer an audio signal to the wireless communications module 160 through the UART interface, to implement a function of playing music by using the Bluetooth headset.

The MIPI interface may be used to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by using software. The GPIO interface may be configured as a control signal or a data signal. In some embodiments, the GPIO interface may be used to connect the processor 110 to the camera 193, the display 194, the wireless communications module 160, the audio module 170, the sensor module 180, and the like. The GPIO interface may alternatively be configured as an I2C interface, an I2S interface, a UART interface, an MIPI interface, or the like.

The USB port 130 is a port that conforms to a USB standard specification, and may be specifically a mini USB port, a micro USB port, a USB Type C port, or the like. The USB port 130 may be used to connect to a charger to charge the electronic device 100, or may be used to transmit data between the electronic device 100 and a peripheral device, or may be used to connect to a headset for playing audio through the headset. The port may be configured to connect to another electronic device such as an AR device.

It may be understood that an interface connection relationship between modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input from a wired charger through the USB port 130. In some embodiments of wireless charging, the charging management module 140 may receive a wireless charging input through a wireless charging coil of the electronic device 100. The charging management module 140 may further supply power to the electronic device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communications module 160, and the like. The power management module 141 may be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communications module 150 may provide a wireless communication solution that includes 2G/3G/4G/5G or the like and that is applied to the electronic device 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert the signal into an electromagnetic wave by using the antenna 1 for radiation. In some embodiments, at least some function modules of the mobile communications module 150 may be disposed in the processor 110. In some embodiments, at least some function modules of the mobile communications module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then a processed low-frequency baseband signal is transferred to the application processor. The application processor outputs a sound signal by using an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same component with the mobile communications module 150 or another function module.

The wireless communications module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like and that is applied to the electronic device 100. The wireless communications module 160 may be one or more components integrating at least one communications processing module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave by using the antenna 2 for radiation.

In some embodiments, in the electronic device 100, the antenna 1 and the mobile communications module 150 are coupled, and the antenna 2 and the wireless communications module 160 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

In this embodiment of this application, the display 194 has a large size. When controlling the electronic device 100 with one hand, a user cannot easily touch each area of the display 194. The size of the display 194 may be, for example, 5 inches or more than 5 inches, or 10 inches or more than 10 inches. From a perspective of a display form, the display 194 may be a common flat display, or a curved display with a radian on one side or both sides, or a foldable display. A substrate of a display panel in the curved display may be plastic, and may be bent to a specific radian on one side or both sides. The foldable display may be folded, and the foldable display may be switched between a folded form and an unfolded form. A substrate of a display panel in the foldable display may be plastic.

The electronic device 100 can implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into a standard image signal in an RGB format, a YUV format, or the like. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. Therefore, the electronic device 100 can play or record videos of a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. Applications such as intelligent cognition of the electronic device 100, for example, image recognition, facial recognition, speech recognition, and text understanding, may be implemented through the NPU.

The external memory interface 120 may be used to connect to an external memory card, for example, a micro SD card, to extend a storage capability of the electronic device 100. The external memory card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (such as audio data and a phone book) and the like that are created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be configured to encode and decode an audio signal. In some embodiments, the audio module 170 may be disposed in the processor 110, or some function modules of the audio module 170 are disposed in the processor 110.

The speaker 170A, also referred to as a "loudspeaker", is configured to convert an audio electrical signal into a sound signal. The electronic device 100 may listen to music or answer a hands-free call by using the speaker 170A.

The receiver 170B, also referred to as an "earpiece", is configured to convert an audio electrical signal into a sound signal. When a call is answered or audio information is listened to by using the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound by moving a human mouth close to the microphone 170C to input a sound signal to the microphone 170C. At least one microphone 170C may be disposed in the electronic device 100. In some other embodiments, two microphones 170C may be disposed in the electronic device 100, to implement a noise reduction function, in addition to collecting a sound signal. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be the USB port 130, or may be a 3.5-mm open mobile electronic device platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may also calculate a touch position based on a detection signal of the pressure sensor 180A. In some embodiments, touch operations that are performed at a same touch position but have different touch operation intensity may correspond to different operation instructions. For example, when a touch operation whose touch operation intensity is less than a first pressure threshold is performed on a Messages icon, an instruction for viewing an SMS message is executed. When a touch operation whose touch operation intensity is greater than or equal to the first pressure threshold is performed on a Messages icon, an instruction for creating an SMS message is executed.

The gyroscope sensor 180B may be configured to determine a motion posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during shooting. For example, when the shutter is pressed, the gyroscope sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyroscope sensor 180B may be further used in a navigation scenario and a motion-sensing game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a flip phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device 100, and when the electronic device 100 is still, a magnitude and a direction of gravity may be detected. The acceleration sensor may be configured to identify a posture of the electronic device, and is used in an application such as switching between a landscape mode and a portrait mode or a pedometer.

The distance sensor 180F is configured to measure a distance. The electronic device 100 may measure the distance in an infrared or a laser manner. In some embodiments, in a photographing scenario, the electronic device 100 may measure a distance by using the distance sensor 180F, to implement quick focusing.

The optical proximity sensor 180G may include, for example, a light-emitting diode (LED) and an optical detector such as a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a leather case mode or a pocket mode to automatically unlock or lock the screen.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 degrades performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown due to a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor 180K may alternatively be disposed on a surface of the electronic device 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal. In some embodiments, the bone conduction sensor 180M may alternatively be disposed in a headset, to obtain a bone conduction headset. The audio module 170 may obtain a voice signal through parsing based on the vibration signal that is of the vibration bone of the vocal part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to user setting and function control of the electronic device 100.

The motor 191 may generate a vibration prompt. The motor 191 may be configured to produce an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is used to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 can support a nano-SIM card, a micro-SIM card, a SIM card, and the like. A plurality of cards may be simultaneously inserted into a same SIM card interface 195. The plurality of cards may be of a same type, or may be of different types. The SIM card interface 195 is applicable to different types of SIM cards. The SIM card interface 195 is also applicable to an external storage card. The electronic device 100 interacts with a network by using the SIM card, to implement functions such as calling and data communication. In some embodiments, the electronic device 100 uses an eSIM, namely, an embedded SIM card. The eSIM card may be embedded in the electronic device 100, and cannot be separated from the electronic device 100.

A software system of the electronic device 100 may use a layered architecture, an event-driven architecture, a microkernel architecture, a micro service architecture, or a cloud architecture. In an embodiment of this application, an Android system with a layered architecture is used as an example to describe a software structure of the electronic device 100.

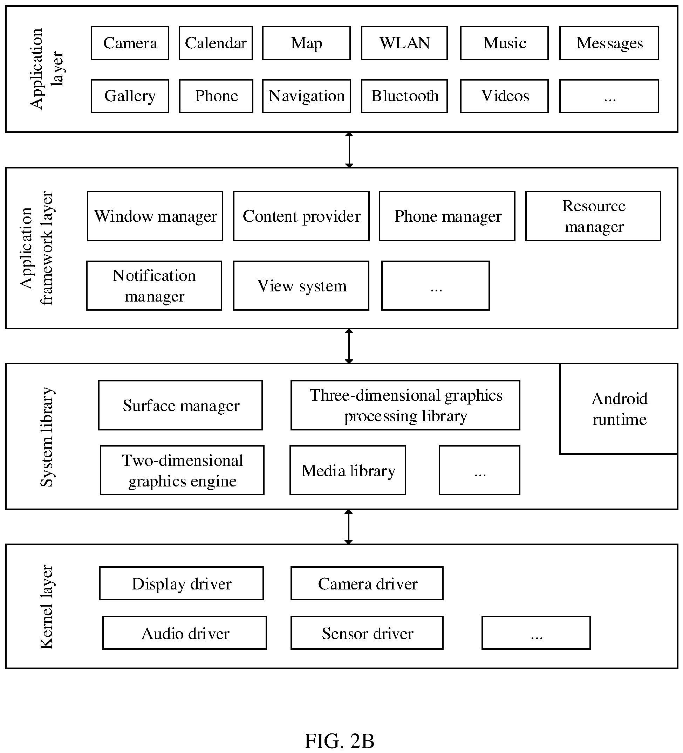

FIG. 2B is a block diagram of a software structure of an electronic device 100 according to an embodiment of this application.

In the layered architecture, software is divided into several layers, and each layer has a clear role and task. The layers communicate with each other through a software interface. In some embodiments, an Android system is divided into four layers, that is, an application layer, an application framework layer, an Android runtime (Android runtime) and system library, and a kernel layer from top to bottom.

The application layer may include a series of application packages.

As shown in FIG. 2B, the application package may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2B, the application framework layer may include a window manager, a content provider, a view system, a phone manager, a resource manager, a notification manager, and the like. In this embodiment of this application, the application framework layer may further include a side gesture manager and a side window manager. The side gesture manager is configured to identify a gesture that is entered by a user on a display and that is used to trigger the electronic device to enter a one-hand mode. The side manager is configured to display, in a reachable area, an interactive interface element originally displayed in an unreachable area.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and received, a browsing history and a browsing bookmark, an address book, and the like.

The view system includes visual controls, such as a control for displaying a text and a control for displaying an image. The view system may be configured to construct an application. A display interface may include one or more views. For example, a display interface including a message notification icon may include a text display view and an image display view.

The phone manager is configured to provide a communication function of the electronic device 100, for example, management of a call status (including answering, declining, or the like).

The resource manager provides various resources for an application, such as a localized character string, an icon, a picture, a layout file, and a video file.

The notification manager enables an application to display notification information in a status bar, and may be configured to convey a notification message. The notification manager may automatically disappear after a short pause without requiring user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on the screen in a form of a dialog window. For example, text information is displayed in the status bar, an alert sound is played, the electronic device vibrates, or the indicator light blinks.

The Android runtime includes a kernel library and a virtual machine. The Android runtime is responsible for scheduling and management of the Android system.

The kernel library includes two parts: One part is a performance function that needs to be invoked by Java language, and the other part is an Android kernel library.

The application layer and the application framework layer run on a virtual machine. The virtual machine executes Java files at the application layer and the application framework layer as binary files. The virtual machine is configured to implement functions such as object life cycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes examples of working procedures of software and hardware of the electronic device 100 with reference to a photographing scenario.

When the touch sensor 180K receives a touch operation, a corresponding hardware interruption is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a single-tap touch operation and a control corresponding to the single-tap operation is a control of a camera application icon. A camera application invokes an interface at the application framework layer, so that the camera application is started. Then, the camera driver is started by invoking the kernel layer, and a static image or a video is captured by using the camera 193.

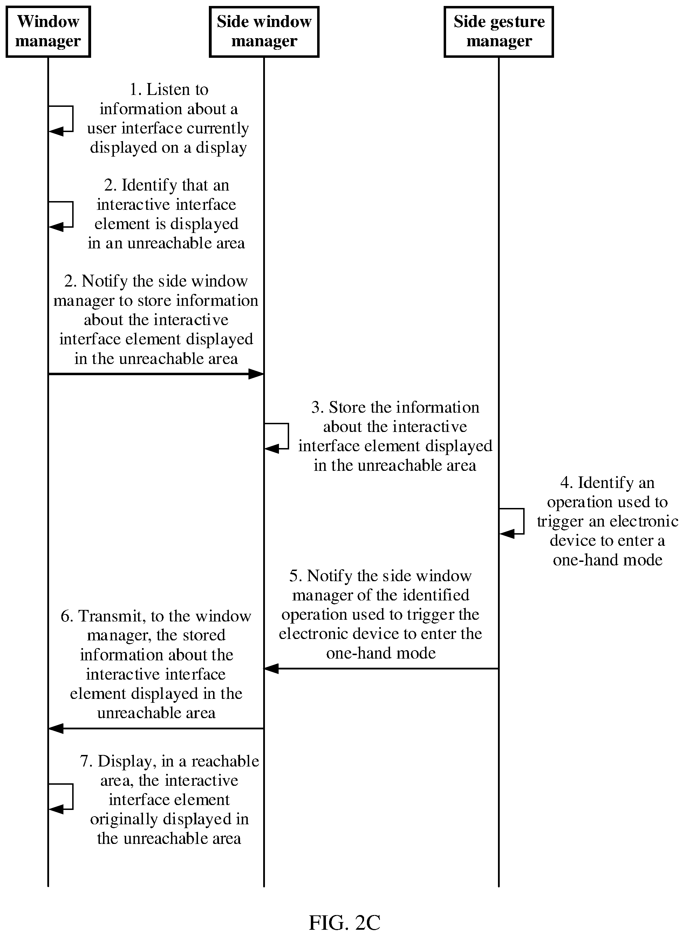

Refer to FIG. 2C. FIG. 2C is a schematic diagram of an example of a flowchart in which software modules of an electronic device 100 collaboratively implement a user interface display method according to an embodiment of this application. As shown in FIG. 2C, the user interface display method may be cooperatively completed by a window manager, a side gesture manager, and a side window manager, and may mainly include the following steps:
1. The window manager listens to information about a user interface currently displayed on a display, and identifies whether an interactive interface element is displayed in an unreachable area of the current display. The information about the user interface currently displayed on the display herein may include a type, a quantity, content, a color, or other information of each interface element displayed on the user interface.
2. When identifying that the interactive interface element is displayed in the unreachable area of the current display, the window manager notifies the side window manager to store information about the interactive interface element displayed in the unreachable area. The information about the interactive interface element displayed in the unreachable area herein may include a type, a quantity, content, and a color of the interactive interface element, other information used to describe the interactive interface element, and the like.
3. The side window manager stores the information about the interactive interface element displayed in the unreachable area.
4. The side gesture manager obtains an original input event from a kernel layer, and identifies that an operation corresponding to the input event is an operation used to trigger the electronic device to enter a one-hand mode.
5. The side gesture manager notifies the side window manager of the identified operation used to trigger the electronic device to enter the one-hand mode.
6. The side window manager transmits, to the window manager, the stored information about the interactive interface element displayed in the unreachable area.
7. The window manager displays, in a reachable area based on the information about the interactive interface element displayed in the unreachable area, the interactive interface element originally displayed in the unreachable area.

With reference to an example of a user interface provided by an electronic device 100, the following describes a user interface display method provided in an embodiment of this application.

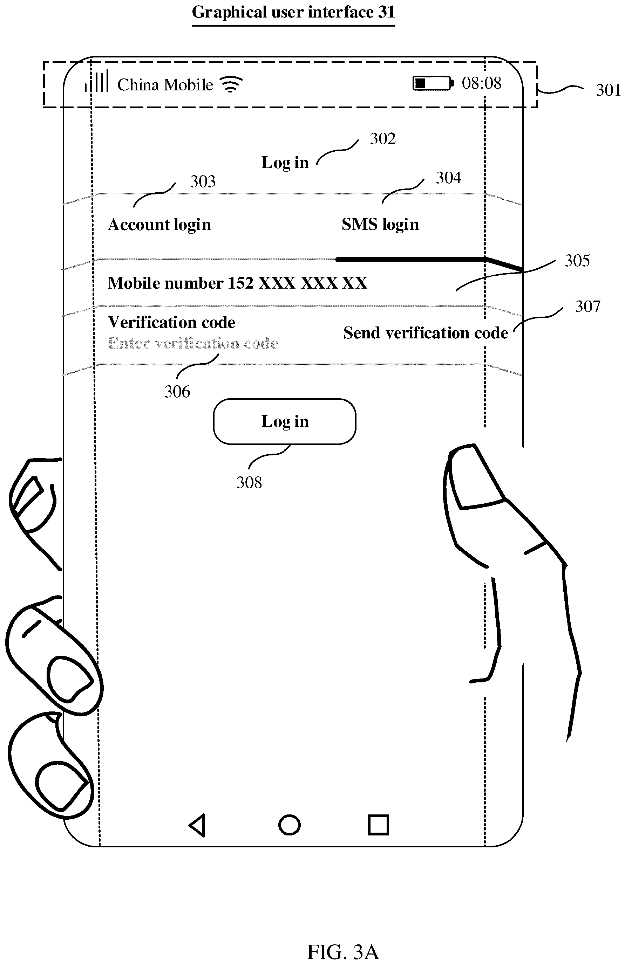

Refer to FIG. 3A. FIG. 3A is a schematic diagram of holding an electronic device by a user with one hand. The electronic device is configured with a curved-surface display, and two sides of the curved-surface display have a particular radian. As shown in FIG. 3A, the user holds the electronic device with the right hand. The display of the electronic device displays a user interface 30 currently output by a system.

The user interface 30 may be a login interface displayed when the electronic device starts some applications (for example, WeChat (WeChat) and Skype) for the first time. As shown in FIG. 3A, the user interface 30 includes a status bar 301, an interface indicator 302, a tab 303, a tab 304, a mobile number input box 305, a verification code input box 306, a control 307, a control 308, and a navigation bar.

The status bar 301 may include a signal strength indicator of a mobile communications signal (also referred to as a cellular signal), an operator name (for example, "China Mobile"), a signal strength indicator of a wireless fidelity (wireless fidelity, Wi-Fi) signal, a battery status indicator, and a time indicator, and the like.

The interface indicator 302 is used to indicate that the current interface is a login interface, and may be, for example, a text "login", an icon, or an indicator of another type.

Both the tab 303 and the tab 304 may be configured to listen to a user operation (for example, a touch operation or a tap operation). The electronic device may display, in response to a user operation performed on the tab 303, a login interface used when login is performed by using an account. The electronic device may display, in response to a user operation performed on the tab 304, a login interface used when login is performed by using an SMS message. For example, a user interface 31 is an SMS login interface displayed when the user selects the tab 304.

The mobile number input box 305 may be configured to listen to a user operation (for example, a touch operation or a tap operation). The electronic device may display a virtual keyboard in response to the user operation performed on the mobile number input box 305, so that a user enters a mobile number by using the virtual keyboard.

The verification code input box 306 may be configured to listen to a user operation (for example, a touch operation or a tap operation). The electronic device may display a virtual keyboard in response to the user operation performed on the verification code input box 306, so that a user enters a verification code by using the virtual keyboard.

The control 307 may be configured to listen to a user operation (for example, a touch operation or a tap operation). In response to the user operation performed on the control 307, the electronic device may request to obtain a verification code from a corresponding server (for example, a server corresponding to an application that provides the user interface 31).

The control 308 may be configured to listen to a user operation (for example, a touch operation or a tap operation). The electronic device may initiate a login request to a corresponding server in response to the user operation performed on the control 308.

The navigation bar may include system navigation buttons such as a back button, a home screen button, and a multitask button. When detecting that the user taps the back button, the electronic device may display a previous interface of the current interface. When detecting that the user taps the home screen button, the electronic device may display a home screen. When detecting that the user taps the multitask button, the electronic device may display a task recently started by the user.

Interactive interface elements in the user interface 31 may include the tab 303, the tab 304, the mobile number input box 305, the verification code input box 306, the control 307, the control 308, and the navigation bar.

As shown in FIG. 3A, an unreachable area of the display displays some interactive interface elements. The tab 303, the tab 304, the mobile number input box 305, the verification code input box 306, the control 307, and the control 308 are all displayed in the unreachable area. When holding the electronic device with one hand, the user cannot touch or is difficult to touch these interactive interface elements.

In some embodiments of this application, when the electronic device displays an interactive interface element in the unreachable area of the display, the electronic device may prompt the user to enter a one-hand mode. The one-hand mode indicates that the electronic device displays, in the reachable area, the interactive interface element originally displayed in the unreachable area, to facilitate the user controls the electronic device with one hand.

In some other embodiments of this application, the electronic device may display an interactive interface element in an unreachable area of the display, and when detecting that the user holds the electronic device with one hand, the electronic device prompts the user to enter a one-hand mode. In an implementation, the electronic device may analyze, based on pressure data detected by pressure sensors distributed on a back side and a side edge of the electronic device, whether the user holds the electronic device with one hand, and may further obtain, through analysis, whether to hold the electronic device with the left hand or hold the electronic device with the right hand. In another implementation, if antennas are distributed on side edges around the electronic device, when the user holds the electronic device, interference is caused for a corresponding antenna to receive a signal. The electronic device may analyze, based on strength of the signal received through the antenna, whether the user holds the electronic device with one hand, and may further obtain, through analysis, whether to hold the electronic device with the left hand or hold the electronic device with the right hand.

In some still other embodiments of this application, the electronic device displays the interactive interface element in the unreachable area of the display. When detecting that the user holds the electronic device with one hand and determining that the user currently has a requirement for controlling the interactive interface element displayed in the unreachable area, the electronic device prompts the user to enter the one-hand mode. When detecting that a projection length L1, on the display, of a finger floating above the display exceeds a specified length L2 (for example, L2 is equal to 5 centimeters), the electronic device may determine that the user currently has the requirement for controlling the interactive interface element displayed in the unreachable area. It may be understood that, when a length of a thumb (namely, the projection length L1) extended by the user is greater than the specified length L2, it indicates that the user wants to try to reach a farther position on the display. In this case, the electronic device may prompt a manner for the user to enter the one-hand mode, so as to improve convenience for the user to control the electronic device with one hand. The specified length L0 may be set by the user based on a size of a hand of the user.

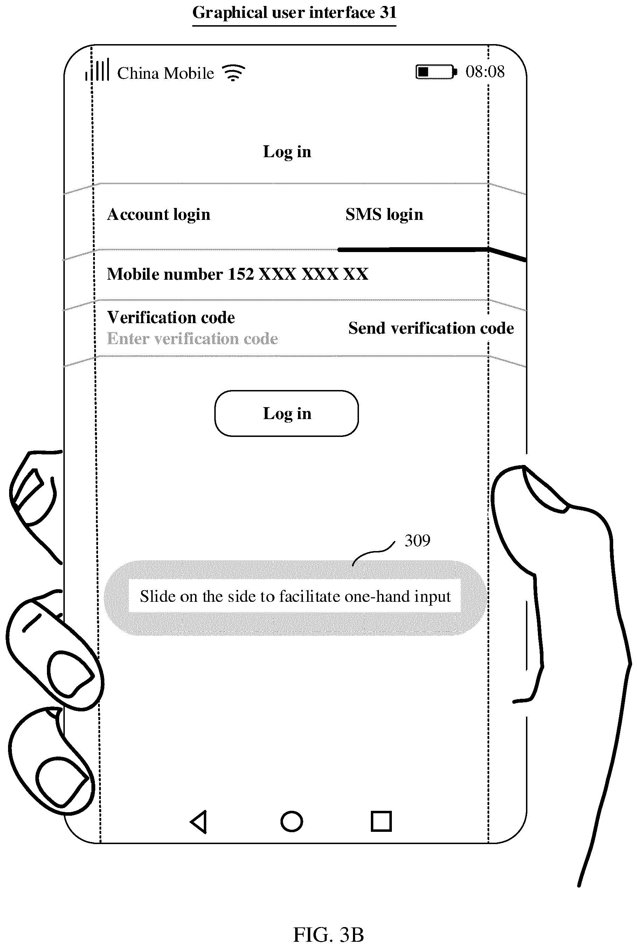

Refer to FIG. 3B. FIG. 3B shows a possible manner in which an electronic device prompts a user to enter a one-hand mode. As shown in FIG. 3B, the electronic device may display prompt information 309 on a display, to prompt the user to enter the one-hand mode by sliding on a side edge. This is not limited to the prompt manner of the text type shown in FIG. 3B, the electronic device may further prompt, by outputting prompt information of another type, the user to enter the one-hand mode. For example, the electronic device may further prompt, by outputting an icon, an animation displayed on the display, or a voice played by using a speaker, the user to enter the one-hand mode.

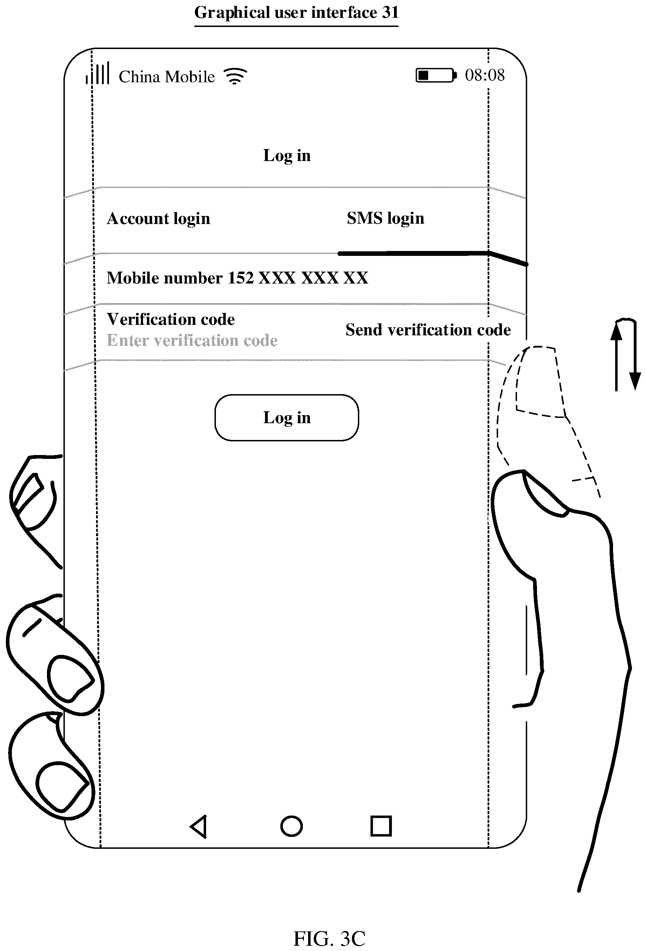

FIG. 3C shows a possible gesture used to trigger an electronic device to enter a one-hand mode. The one-hand mode herein indicates that when a user holds the electronic device with one hand, the electronic device displays, in a reachable area, an interactive interface element originally displayed in an unreachable area. In other words, in the one-hand mode, when the user holds the electronic device with one hand, the interactive interface element originally displayed in the unreachable area is displayed in a position that can be touched by a finger of the user. In this embodiment of this application, the gesture used to trigger the electronic device to enter the one-hand mode may be referred to as a first gesture.

As shown in FIG. 3C, the gesture used to trigger the electronic device to enter the one-hand mode may indicate that the finger of the user (for example, a thumb of the right hand) continuously slides up and down in a preset area, and a continuous sliding distance L3 is greater than a threshold L4. Continuous sliding up and down indicates that in a sliding process of the finger of the user, a sliding direction of the finger changes from up to down or from down to up, and a quantity of times of direction change may be one or more. Herein, the upward sliding of the finger indicates sliding totally along or close to a direction that is of a central axis of a display and that points to the top of the display, and the downward sliding of the finger indicates sliding totally along or close to a direction that is of the central axis of the display and that points to the bottom of the display. Usually, the threshold L4 may be preset by the user, or may be set by the electronic device by default. The preset area may be an area with a radian on one side or two sides of the curved surface display shown in FIG. 3C, that is, an area outside a dashed line shown in the figure.

It may be understood that, when the user holds, with one hand, the electronic device configured with the curved display, the finger of the user usually touches areas having the radian on two sides. By using the gesture shown in FIG. 3C, without adjusting an angle or a manner of holding the electronic device, the user directly slide the finger of the user which touches the areas having the radian, to trigger the electronic device to enter the one-hand mode. In this way, the user can more conveniently trigger the electronic device to enter the one-hand mode.

This is not limited to continuous sliding up and down by using the finger of the user shown in FIG. 3C. The gesture used to trigger the electronic device to enter the one-hand mode may further indicate that a finger (for example, a thumb of the right hand) of the user continuously slides left or right in a preset area, and a continuous sliding distance L3 is greater than a threshold L4. Alternatively, the gesture used to trigger the electronic device to enter the one-hand mode may be a touch-and-hold gesture or a heavy press gesture that is entered by a finger (for example, a thumb of the right hand) of the user in a preset area.

The preset area shown in FIG. 3C is not limited to the area with the radian on one side or two sides of the curved display. The preset area may alternatively be a lower left corner area, a lower right corner area, or even an entire display area of the display, or the like. The preset area may be autonomously set by the user based on a habit of the user, or may be set by the electronic device by default.

A finger part that is used by the user to enter the gesture for triggering the electronic device to enter the one-hand mode may be a thumb belly, a middle part of the thumb, an index finger belly, a middle part of the index finger, or the like. This is not limited in this embodiment of this application.

In this embodiment of this application, the gesture used to trigger the electronic device to enter the one-hand mode is the continuous sliding gesture, and may be distinguished from an existing single sliding gesture that has a corresponding function, to avoid a conflict with the function implemented by the existing single sliding gesture. For example, an existing single upward sliding gesture or single downward sliding gesture may trigger the electronic device to slide to display the current user interface, to view more content.

In this embodiment of this application, the gesture used to trigger the electronic device to enter the one-hand mode may be set by default when the electronic device is at delivery, or may be autonomously set by the user. Specifically, the user may select, from a setting menu including a plurality of gestures, a gesture as the gesture used to trigger the electronic device to enter the one-hand mode, or the user may customize, based on a habit of the user, the gesture used to trigger the electronic device to enter the one-hand mode.

When the electronic device detects, on the display, the gesture used to trigger the electronic device to enter the one-hand mode, the electronic device enters the one-hand mode in response to the gesture. To be specific, the electronic device displays, in the reachable area, the interactive interface element originally displayed in the unreachable area.

The unreachable area is relative to the finger of the user holding the electronic device, and the unreachable area may be an area that is difficult to reach by the finger of the user on the display. For example, when the user holds the electronic device with the right hand, the unreachable area may be an upper left corner part of the display. For another example, when the user holds the electronic device with the left hand, the unreachable area may be an upper right corner part of the display.

The reachable area is relative to the finger of the user holding the electronic device, and the unreachable area may be an area that can be or can be easily touched by the finger of the user on the display.

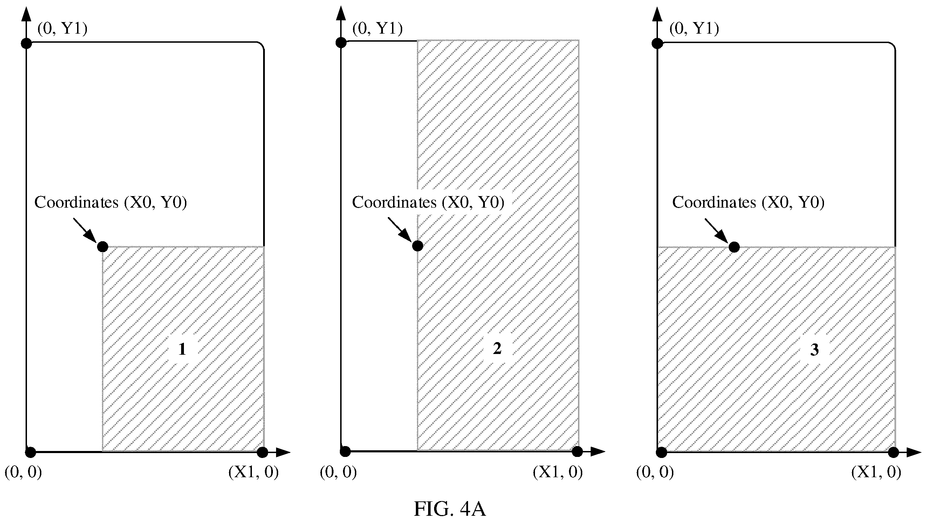

Refer to FIG. 4A to FIG. 4C. FIG. 4A to FIG. 4C show several possible reachable areas.

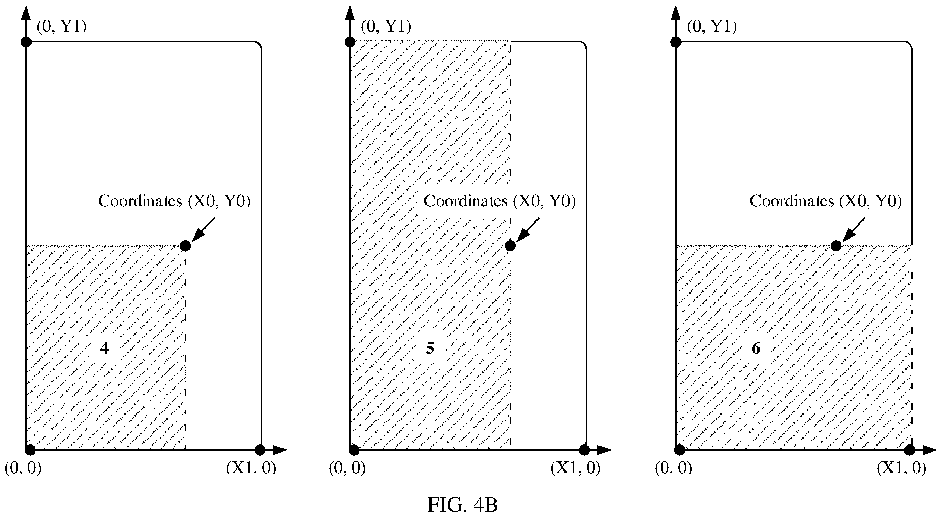

As shown in FIG. 4A and FIG. 4B, a coordinate system may be established by using a location of a lower left corner of a display of an electronic device as an origin (0, 0), a direction from left to right of the display as an X-axis direction, and a direction from bottom to top of the display as a Y-axis direction.

FIG. 4A shows several implementations of a reachable area relative to a finger of a user when the user holds the electronic device with the right hand. The reachable area represented by a rectangular oblique line area 1 is a lower right area of the coordinates (X0, Y0), namely, an area formed by coordinate points whose X-axis coordinates range from X0 to X1 and whose Y-axis coordinates range from 0 to Y0. The reachable area represented by a rectangular oblique line area 2 is a right side area of the coordinates (X0, Y0), namely, an area formed by coordinate points whose X-axis coordinates range from X0 to X1 and whose Y-axis coordinates range from 0 to Y1. The reachable area represented by a rectangular oblique line area 3 is a lower side area of the coordinates (X0, Y0), namely, an area formed by coordinate points whose X-axis coordinates range from 0 to X1 and whose Y-axis coordinates range from 0 to Y0.

FIG. 4B shows several implementations of a reachable area relative to a finger of a user when the user holds the electronic device with the left hand. The reachable area represented by a rectangular oblique line area 4 is a lower left area of the coordinates (X0, Y0), namely, an area formed by coordinate points whose X-axis coordinates range from 0 to X0 and whose Y-axis coordinates range from 0 to Y0. The reachable area represented by a rectangular oblique line area 5 is a left side area of the coordinates (X0, Y0), namely, an area formed by coordinate points whose X-axis coordinates range from 0 to X0 and whose Y-axis coordinates range from 0 to Y1. The reachable area represented by a rectangular oblique line area 6 is a lower side area of the coordinates (X0, Y0), namely, an area formed by coordinate points whose X-axis coordinates range from 0 to X1 and whose Y-axis coordinates range from 0 to Y0.

It should be noted that the rectangular area mentioned in FIG. 4A and FIG. 4B may not be a standard rectangle in geometric definition, but may be similar to a rectangle. A shape of the reachable area is not limited to the rectangular region shown in FIG. 4A and FIG. 4B, and another shape may also be used.

The coordinates (X0, Y0) are coordinates mapped on the display when the finger of the user stretches out or bends. The coordinates (X0, Y0) may be coordinates mapped from a knuckle, volarpads, or another part of the finger on the display. This is not limited herein. In some embodiments, X0 is an X-axis coordinate value of a coordinate point to which a fingertip of the user is mapped on the display, Y0 is a Y-axis coordinate value of the coordinate point to which the fingertip of the user is mapped on the display, X1 is a length of the display in the X-axis direction, and Y0 is a length of the display in the Y-axis direction.

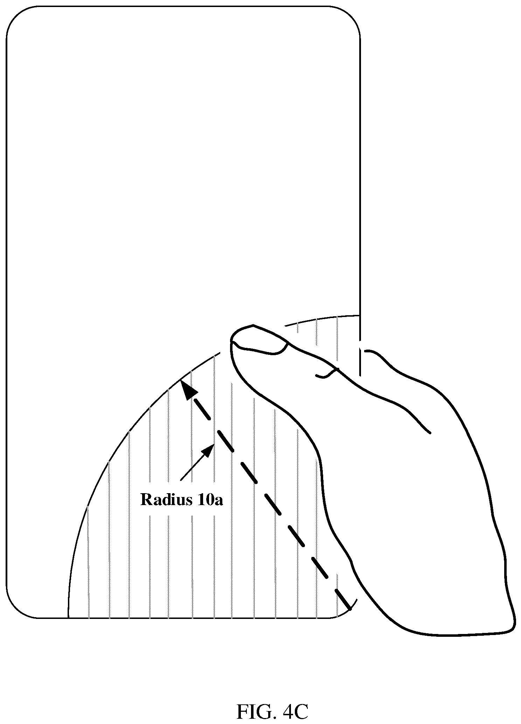

FIG. 4C shows another implementation of a reachable area relative to a finger of a user when the user holds the electronic device with the right hand. As shown in FIG. 4C, the user holds the electronic device with one hand and extends the thumb. A projection of the thumb on a display is a radius a, and a lower right corner of the display is used as a circle center. A sector area determined on the display by using the radius 10a and the circle center is used as the reachable area. For the reachable area, refer to an oblique line area in FIG. 4C. It should be noted that the sector area mentioned herein may not be a standard sector in a geometric definition, but may be similar to a sector.

In this embodiment of this application, the reachable area may be set by the electronic device by default. For example, as shown in FIG. 1, the electronic device may set, by default, that the reachable area includes an area A and an area B. The reachable area may also be autonomously set by the user. For example, the user may select an area from a setting menu including a plurality of areas as the reachable area, or the user may customize the reachable area based on a habit of the user.

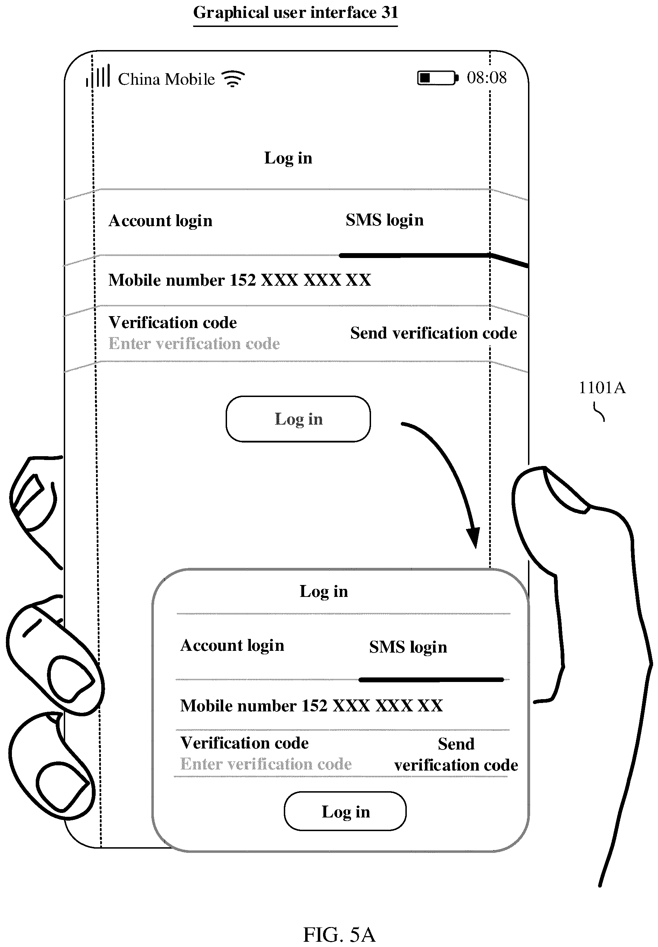

FIG. 5A to FIG. 5D show several implementations in which an electronic device enters a one-hand mode in response to a detected gesture used to trigger entering the one-hand mode. FIG. 5A to FIG. 5D are embodiments in which a user holds the electronic device with the right hand. In the embodiments of FIG. 5A to FIG. 5D, a reachable area is a lower right area of a display.

As shown in FIG. 5A, the electronic device may move, in response to the detected gesture used to trigger entering the one-hand mode, an interactive interface element originally displayed in an unreachable area to the reachable area. The dynamic moving process shown in FIG. 5A may be presented to the user. A moving track, a moving speed, and the like of the interactive interface element in the dynamic moving process are not limited in this embodiment of this application. Alternatively, the dynamic moving process may not be presented to the user. This is not limited in this embodiment of this application.

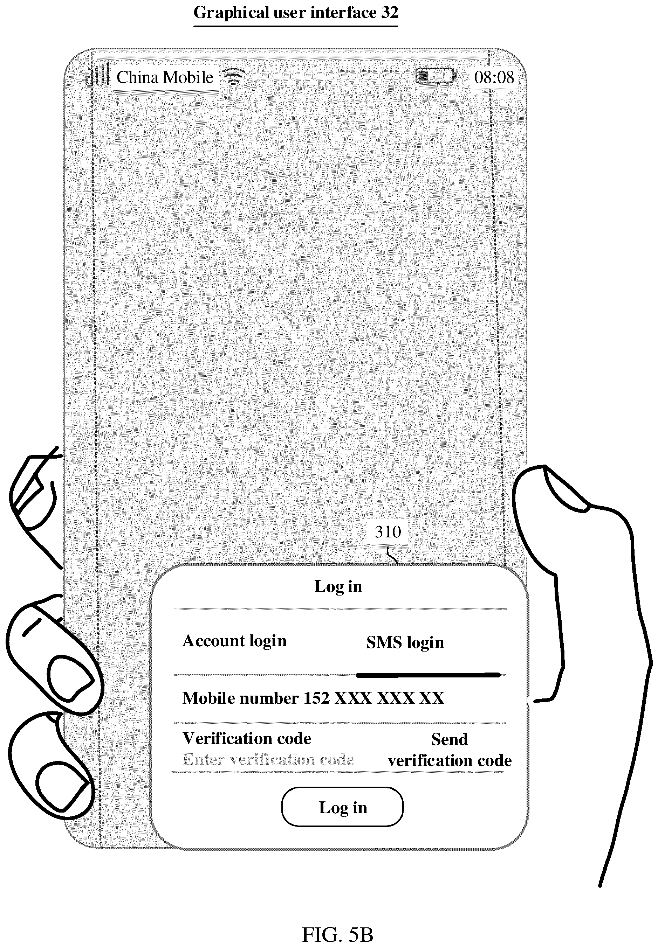

The electronic device displays, in response to the gesture used to trigger entering the one-hand mode, the interactive interface element originally displayed in the unreachable area to the reachable area. In examples in FIG. 5B to FIG. 5D, interactive interface elements originally displayed in the unreachable area include a tab 303, a tab 304, a mobile number input box 305, a verification code input box 306, a control 307, and a control 308 in a user interface 31.

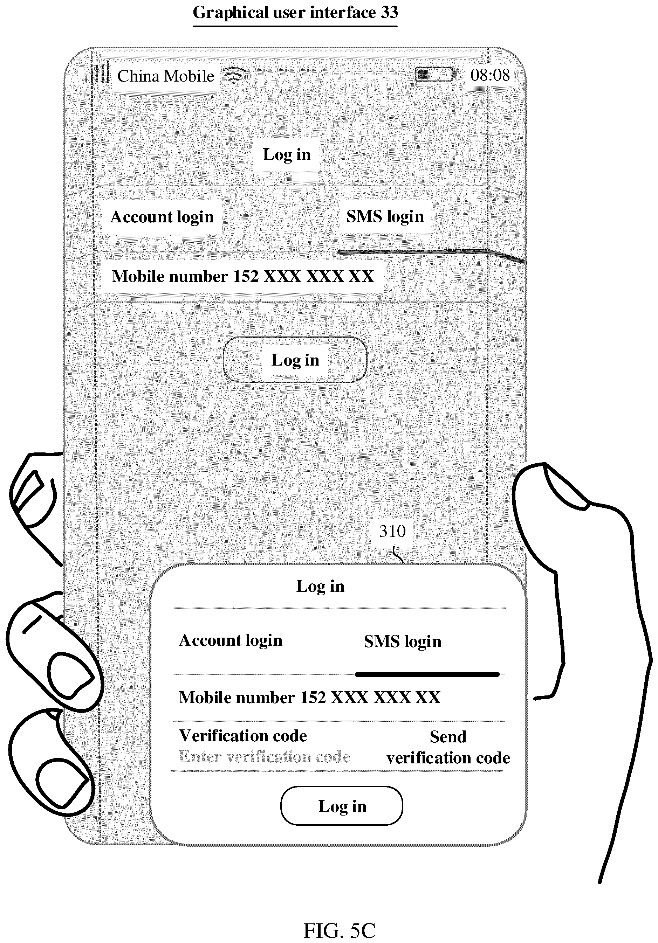

In some embodiments, for ease of viewing by the user, the electronic device may further display, in the reachable area, some non-interactive interface elements displayed in the unreachable area. In a windows 310 shown in FIG. 5B and FIG. 5C, the electronic device may further display an interface indicator 302 in the user interface 31 in the reachable area. This is convenient for the user to view and operate a current interface.

In some embodiments, in the window 310 shown in FIG. 5B and FIG. 5C, when displaying, in the reachable area, the interactive interface element originally displayed in the unreachable area, the electronic device may further zoom out the interactive interface element at the same time, so that all the interactive interface elements can be displayed in the reachable area.

In some embodiments, as shown in FIG. 5B, after the interactive interface element originally displayed in the unreachable area is displayed in the reachable area, the interactive interface element is no longer displayed in the unreachable area.

In some embodiments, as shown in FIG. 5C, after displaying, in the reachable area, the interactive interface element originally displayed in the unreachable area, the electronic device may continuously display the interactive interface element in the unreachable area.

In the window 310 shown in FIG. 5B and FIG. 5C, the electronic device displays, in the reachable area, the interactive interface element originally displayed in the unreachable area, and does not change an original arrangement manner of the interactive interface element. This is not limited thereto. In some embodiments, to conform to a habit of the user and implement aesthetic display, when displaying, in the reachable area, the interactive interface element originally displayed in the unreachable area, the electronic device may further adaptively change the original arrangement manner of the interactive interface element. For example, a spacing between interactive interface elements is adjusted, a display position between interactive interface elements is adjusted, or a display size of the interactive interface element is adjusted.

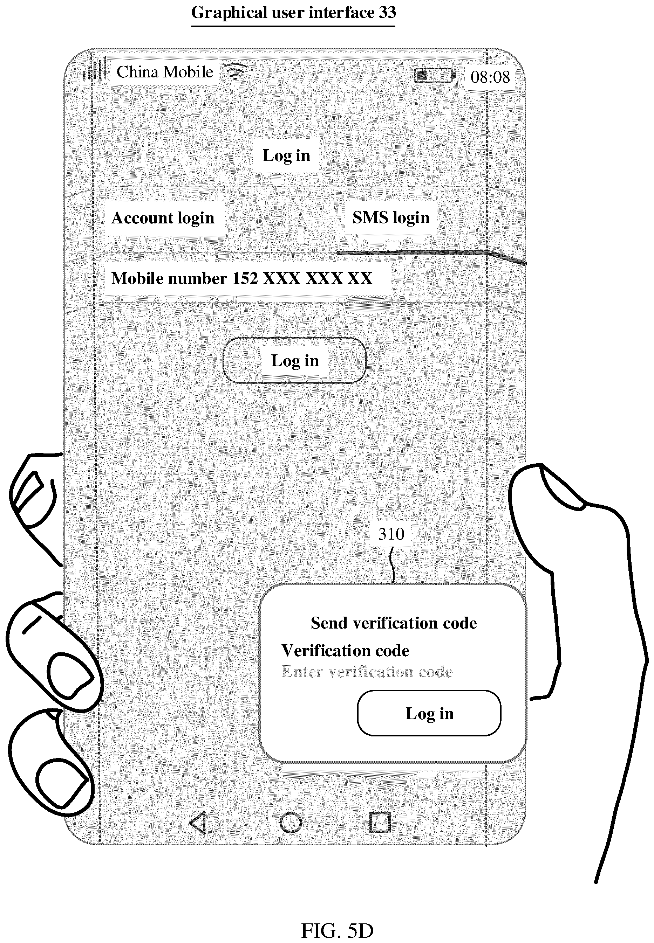

In some embodiments, this is not limited to the embodiments of FIG. 5B and FIG. 5C in which all the interactive interface elements originally displayed in the unreachable area are displayed in the reachable area. The one-hand mode mentioned in this embodiment of this application may alternatively indicate that the electronic device displays, in the reachable area, some interactive interface elements originally displayed in the unreachable area. For example, refer to FIG. 5D. The electronic device may display only the verification code input box 306, the control 307, and the control 308 in the user interface 31 in the reachable area. Some interactive interface elements herein may be usually interface elements that the user is about to enter a user operation. The user can control the electronic device with one hand when displaying some interactive interface elements in the reachable area.

In some embodiments, when displaying, in the reachable area, all the interactive interface elements originally displayed in the unreachable area, the electronic device may further cover, by using a layer of shadow, another area of the display other than the interactive interface elements, to prompt the user to currently enter the one-hand mode. For example, refer to FIG. 5B to FIG. 5D, after the electronic device enters the one-hand mode, black shadows are displayed at all positions on the display except positions of the interactive interface elements in the reachable area. In some other embodiments, when displaying, in the reachable area, all the interactive interface elements originally displayed in the unreachable area, the electronic device may further perform black screen processing on another area of the display other than the interactive interface elements, that is, no interface element is displayed in the another area of the display.

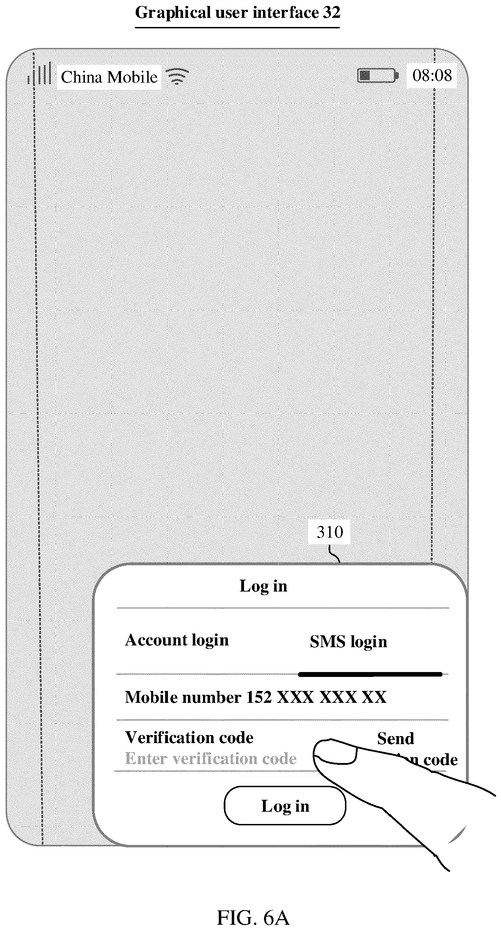

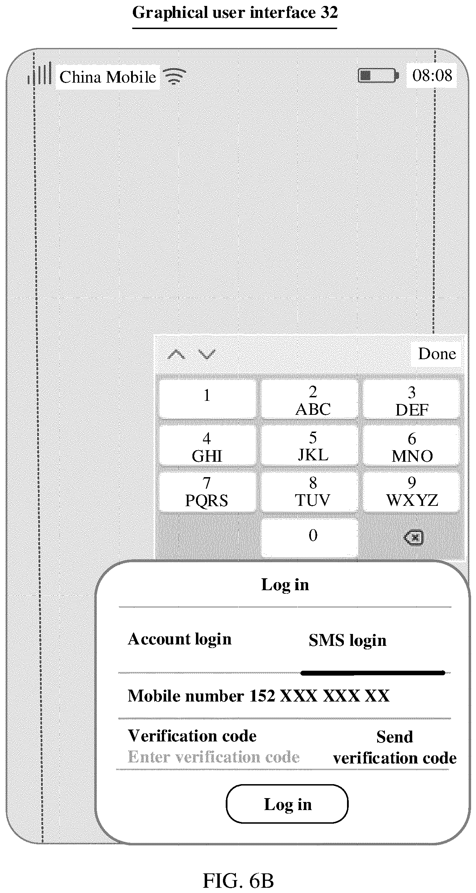

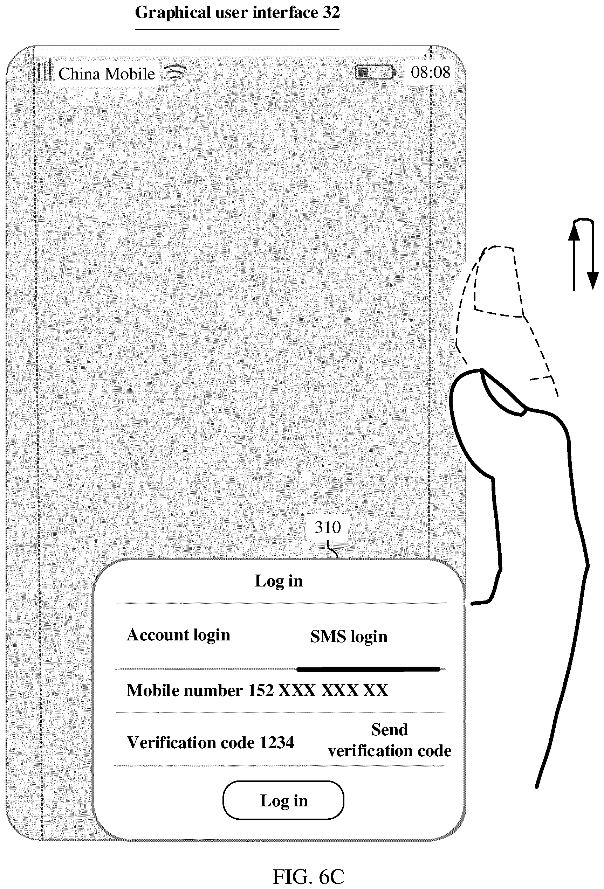

In this embodiment of this application, after the electronic device displays, in the reachable area, all the interactive interface elements originally displayed in the unreachable area, the interactive interface elements in the reachable area are the same as those originally displayed in the unreachable area, and may receive a user operation. In addition, the electronic device may provide a corresponding feedback in response to the operation performed on the interactive interface element in the reachable area. For example, refer to FIG. 6A and FIG. 6B, a verification code input box in a window 310 may be used to listen to an entered user operation (for example, a touch operation or a tap operation), and the electronic device displays a virtual keyboard in response to the user operation, so that the user enters a verification code. Herein, because an electronic device is in a one-hand mode, and the virtual keyboard displayed in the one-hand mode is different from a virtual keyboard displayed in a normal mode, the electronic device may display the virtual keyboard in a reachable area, to facilitate a user to perform an operation. As shown in FIG. 6C, the electronic device may enter the verification code by using the virtual keyboard.

In this embodiment of this application, after entering the one-hand mode, the electronic device may further exit the one-hand mode in response to a received user operation. Herein, that the electronic device exits the one-hand mode indicates that the electronic device restores, to the unreachable area for display, the interactive interface element that is moved to the reachable area for display in the one-hand mode. In this embodiment of this application, a gesture used to trigger the electronic device to exit the one-hand mode may be referred to as a second gesture. The second gesture may be the same as the first gesture, or may be different from the first gesture. This is not limited in this embodiment of this application.

Refer to FIG. 6C. FIG. 6C shows a possible implementation of a gesture used to trigger an electronic device to exit a one-hand mode. The gesture used to trigger the electronic device to exit the one-hand mode may be the same as a gesture used to trigger the electronic device to enter the one-hand mode. For example, refer to FIG. 6C. The gesture used to trigger the electronic device to exit the one-hand mode may be that a finger of a user (for a thumb of the right hand) continuously slides up and down in a preset area, and a continuous sliding distance L3 is greater than a threshold L4.

A specific implementation of the gesture used to trigger the electronic device to exit the one-hand mode is not limited in this embodiment of this application, and is not limited to the gesture shown in FIG. 6C. The gesture used to trigger the electronic device to exit the one-hand mode may alternatively be a tap operation, a touch operation, or the like entered by a finger of a user in an area other than an interactive interface element in the reachable area.

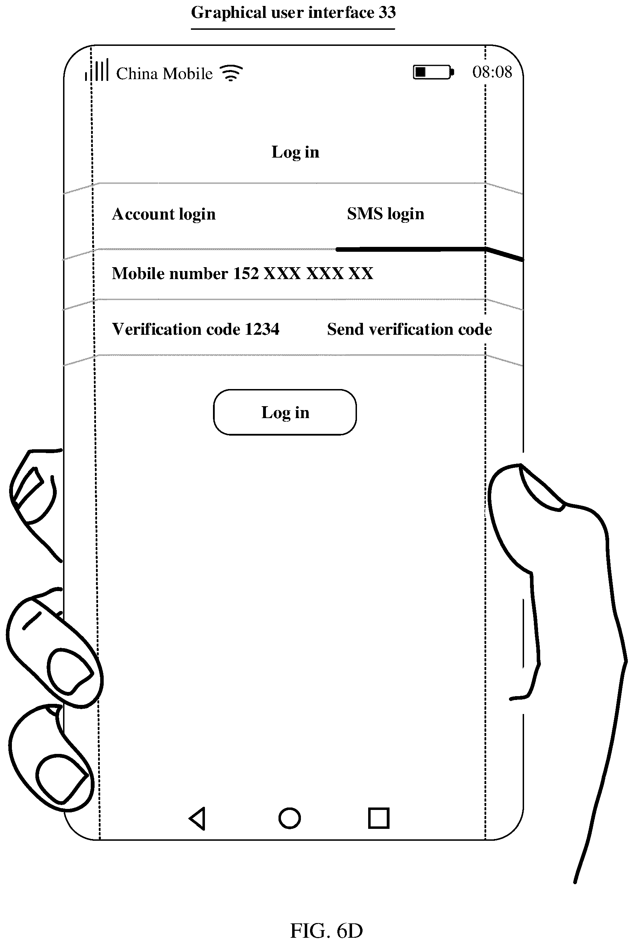

Refer to FIG. 6D. FIG. 6D shows a user interface 33 displayed after an electronic device exits a one-hand mode. As shown in the figure, the electronic device exits the one-hand mode in response to a detected gesture used to trigger exiting the one-hand mode, that is, restores an interactive interface element that is moved to a reachable area for display to an unreachable area for display.

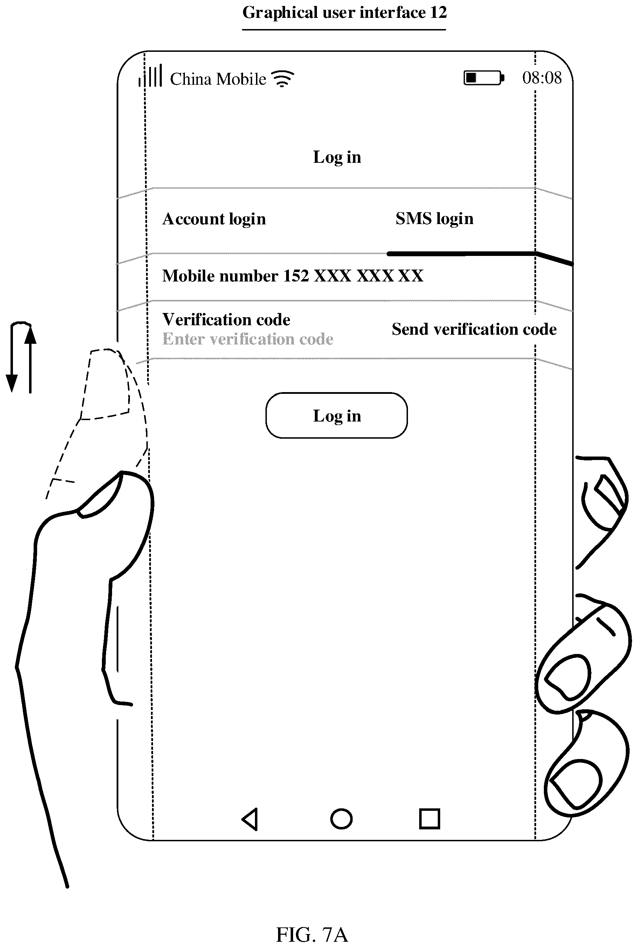

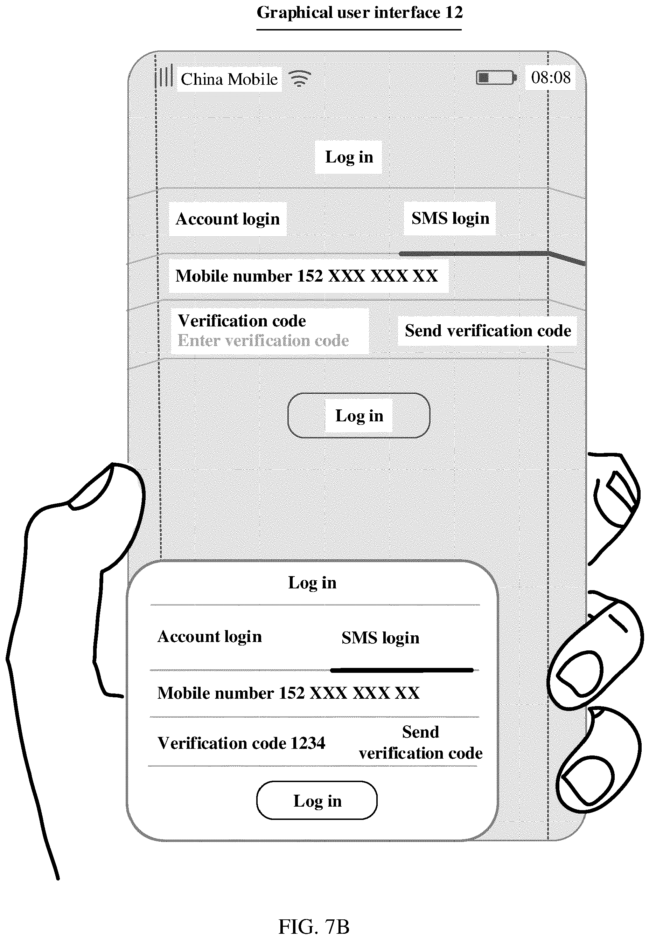

This is not limited to scenarios of holding the electronic device with the right hand in FIG. 3A to FIG. 3C, FIG. 5A to FIG. 5D, and FIG. 6A to FIG. 6D. When the user holds the electronic device with the left hand, and the electronic device displays the interactive interface element in the unreachable area of the display, the electronic device may also enter the one-hand mode in response to the detected gesture used to trigger entering the one-hand mode. For example, refer to FIG. 7A and FIG. 7B. FIG. 7A and FIG. 7B are a schematic diagram in which an electronic device enters a one-hand operation mode when a user holds the electronic device with the left hand.

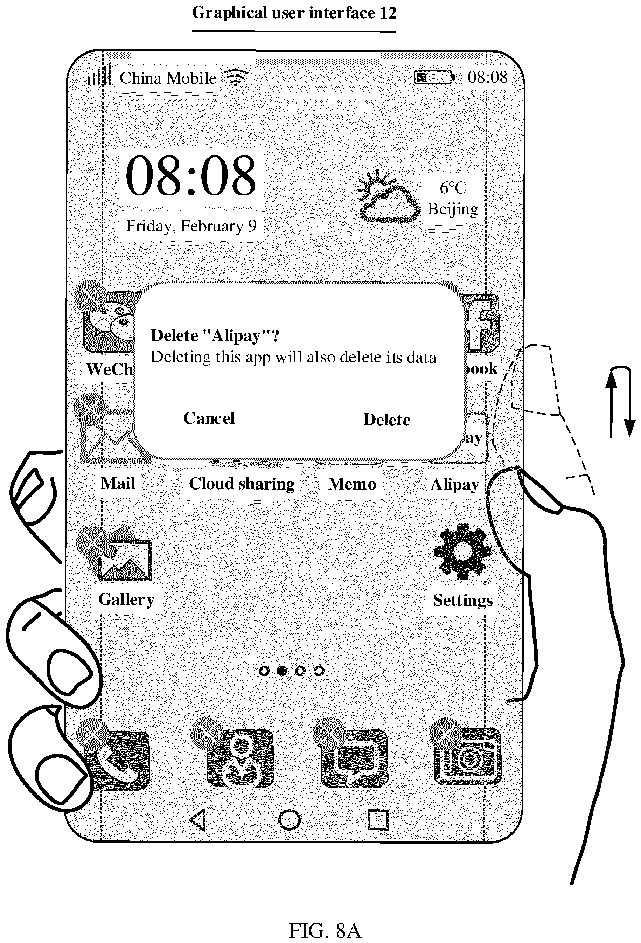

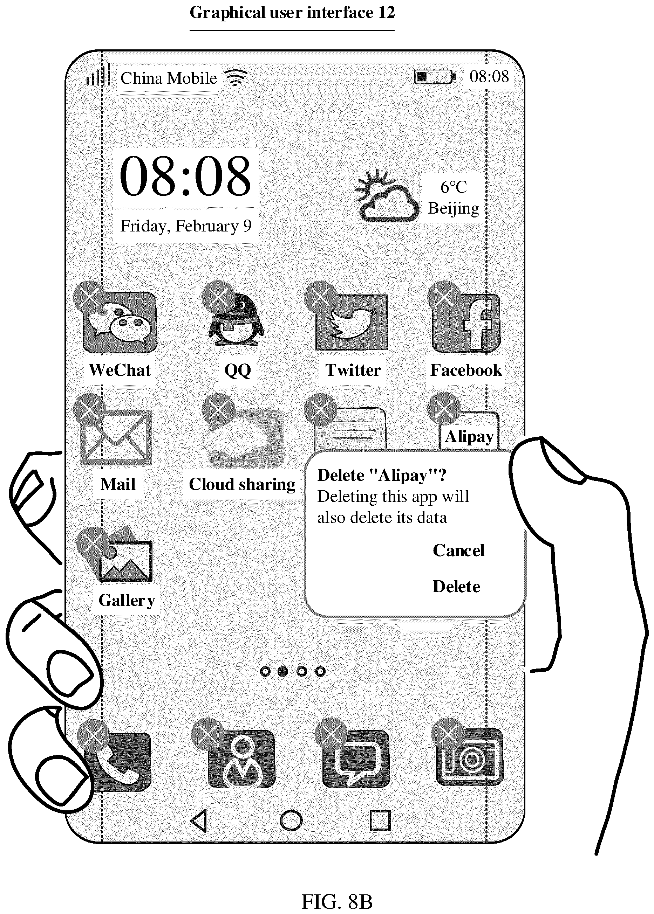

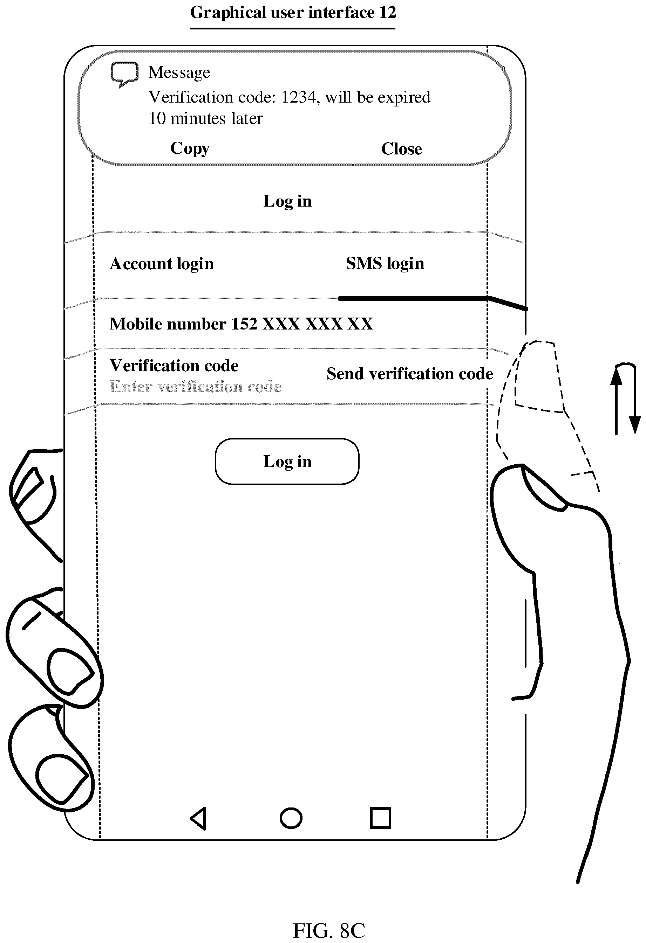

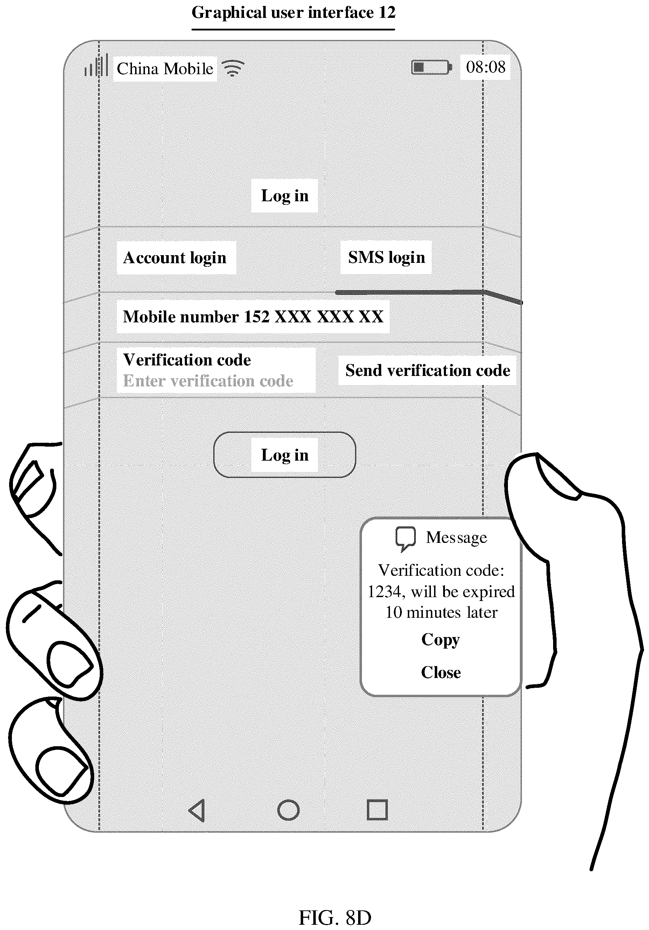

This is not limited to login interfaces shown in the embodiments in FIG. 3A to FIG. 3C, FIG. 5A to FIG. 5D, and FIG. 6A to FIG. 6D. When displaying, on another user interface, an interactive interface element located in an unreachable area, the electronic device may also enter the one-hand mode in response to the entered gesture used to trigger the one-hand mode. Refer to FIG. 8A and FIG. 8B, and FIG. 8C and FIG. 8D. FIG. 8A and FIG. 8B, and FIG. 8C and FIG. 8D each show other two possible scenarios in which a user triggers an electronic device to enter a one-hand mode.

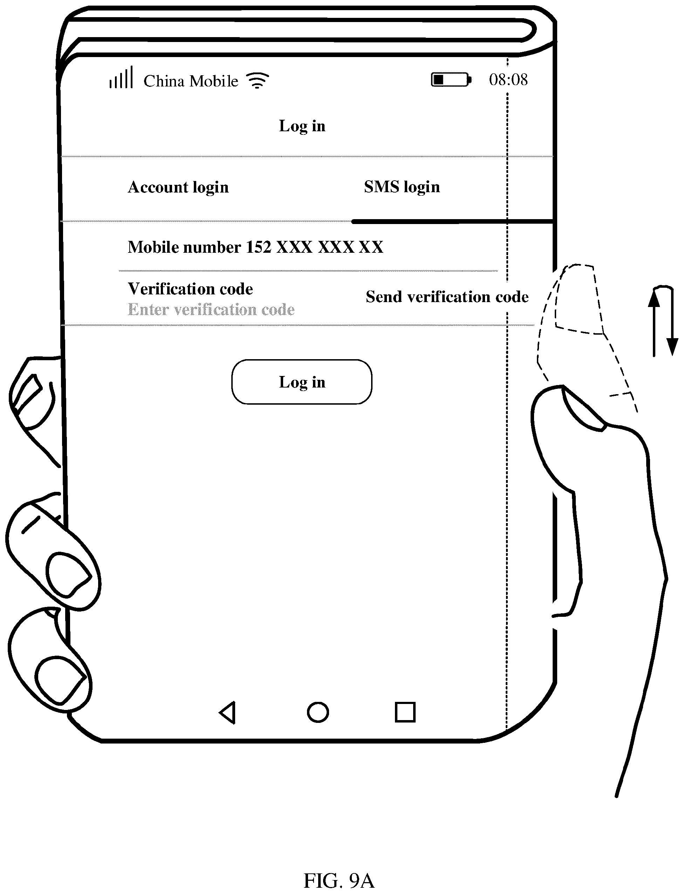

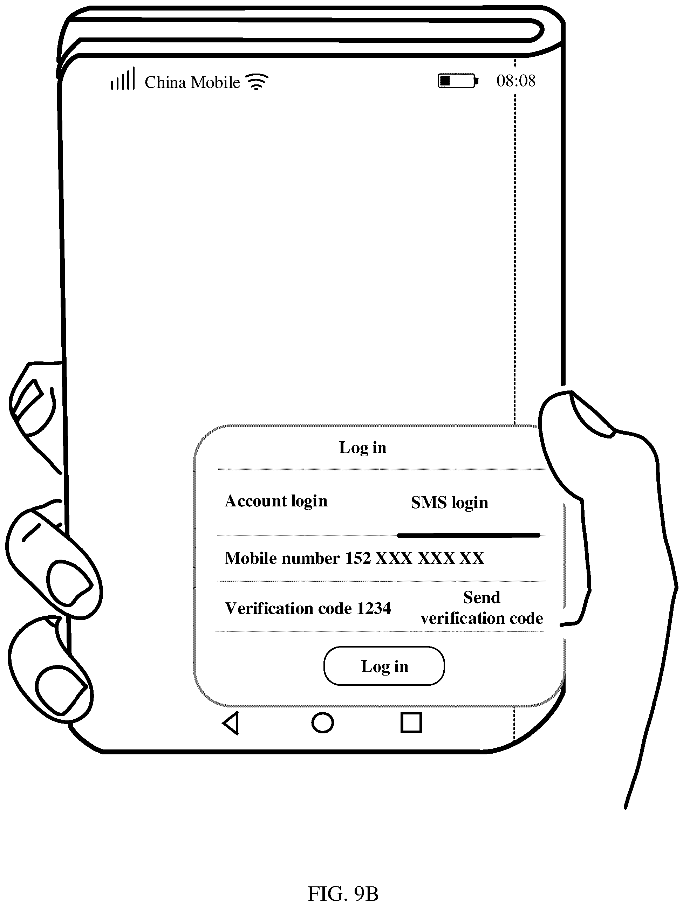

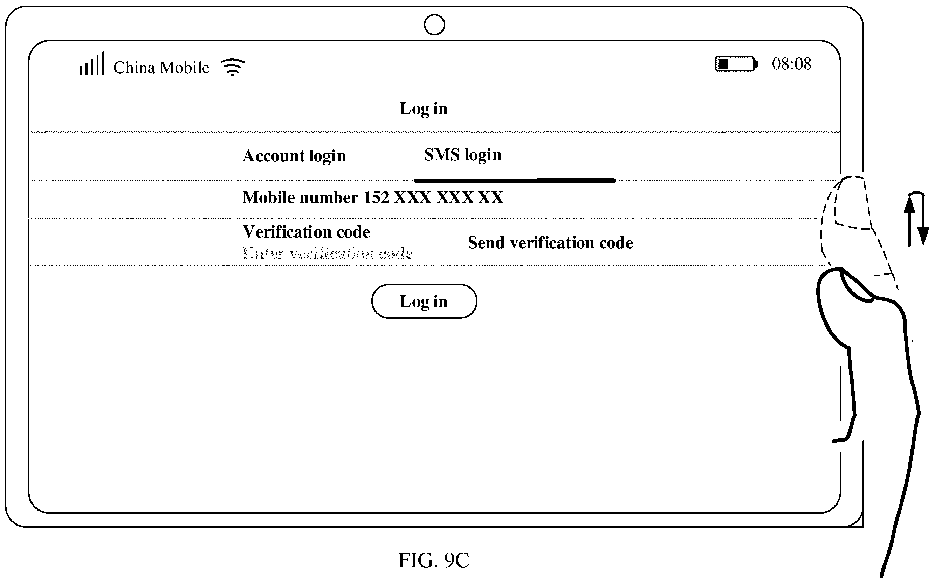

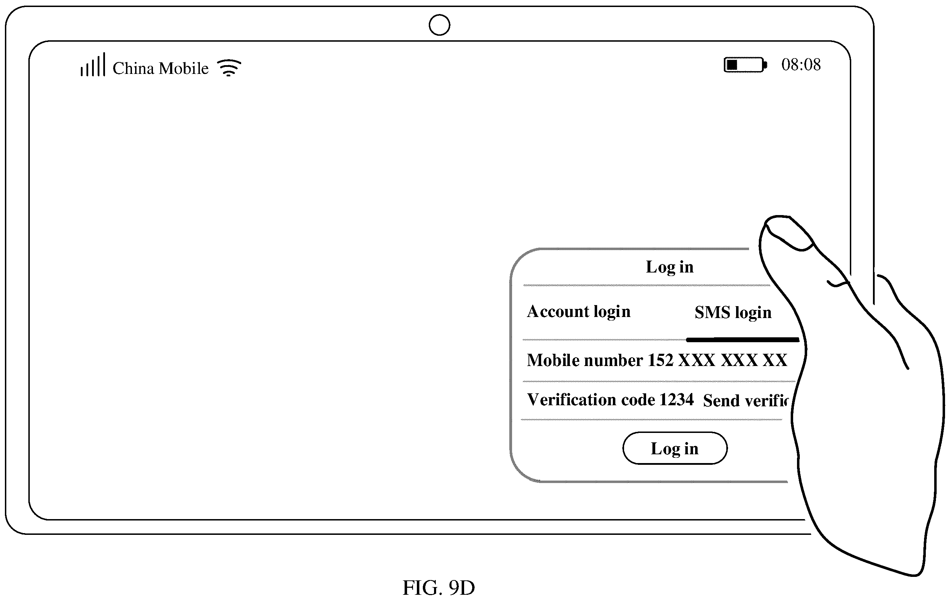

This is not limited to the mobile phone configured with the curved display shown in the embodiments in FIG. 3A to FIG. 3C, FIG. 5A to FIG. 5D, and FIG. 6A to FIG. 6D. When an electronic device is configured with a foldable display, an electronic device is a tablet computer, or the like, the electronic device may also implement the user interface display method provided in embodiments of this application, and may enter a one-hand mode in response to an entered gesture used to trigger the one-hand mode. Refer to FIG. 9A and FIG. 9B, and FIG. 9C and FIG. 9D. FIG. 9A and FIG. 9B show a scenario in which an electronic device enters a one-hand mode when the electronic device is configured with a foldable display. FIG. 9C and FIG. 9D show a scenario in which an electronic device enters a one-hand mode when the electronic device is a tablet computer.

The implementations of this application may be randomly combined to achieve different technical effects.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, all or some of the procedures or functions in this application are generated. The computer may be a general-purpose computer, a dedicated computer, a computer network, or another programmable apparatus. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any available medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Drive), or the like.

A person of ordinary skill in the art may understand that all or some of the procedures of the methods in embodiments may be implemented by a computer program instructing related hardware. The program may be stored in a computer-readable storage medium. When the program is executed, the procedures of the methods in embodiments may be performed. The foregoing storage medium includes any medium that can store program code, such as a ROM, a random access memory RAM, a magnetic disk, or an optical disc.

In conclusion, what are described above are merely embodiments of the technical solutions of the present invention, but are not intended to limit the protection scope of the present invention. Any modification, equivalent replacement, or improvement made according to the disclosure of the present invention shall fall within the protection scope of the present invention.

## Claims

1. A user interface display method, comprising:
displaying, by an electronic device, a user interface on a display, wherein the user interface comprises one or more interface elements;
detecting, by the electronic device when an interactive interface element is displayed in an unreachable area of the display, a first gesture entered on the display, wherein the interactive interface element is an interface element that receives and responds to a user operation; and
displaying, by the electronic device in a reachable area of the display in response to the first gesture, the interactive interface element displayed in the unreachable area, wherein
the reachable area is an area that can be touched or can be easily touched by a user on the display, and the unreachable area is an area that cannot be touched or cannot be easily touched by the user on the display.

2. The method according to claim 1, wherein after the displaying, by the electronic device in a reachable area of the display in response to the first gesture, the interactive interface element displayed in the unreachable area, the method further comprises:
detecting, by the electronic device, a user operation performed on the interactive interface element; and
executing, by the electronic device in response to the user operation performed on the interactive interface element, an instruction to implement a function corresponding to the user operation performed on the interactive interface element.

3. The method according to claim 1 or 2, wherein
the first gesture comprises one or more of the following: a continuous sliding gesture that is entered by a finger of the user in a preset area and with a moving distance greater than a threshold, and a touch-and-hold gesture or a heavy press gesture that is entered by a finger of the user in a preset area.

4. The method according to claim 3, wherein
the preset area comprises one or more of the following: an area with a radian on one side or two sides of the display, and a lower left corner area or a lower right corner area of the display.

5. The method according to any one of claims 1 to 4, wherein the reachable area is determined based on a manner in which the user holds the electronic device; and when a lower left corner position of the display is used as an origin of coordinates (0, 0), a direction from left to right of the display is an X-axis direction, and a direction from bottom to top of the display is a Y-axis direction,
when the user holds the electronic device with the left hand, the reachable area comprises:
an area formed by coordinate points whose X-axis coordinates range from 0 to X0 and whose Y-axis coordinates range from 0 to Y0;
an area formed by coordinate points whose X-axis coordinates range from 0 to X0 and whose Y-axis coordinates range from 0 to Y1; or
an area formed by coordinate points whose X-axis coordinates range from 0 to X1 and whose Y-axis coordinates range from 0 to Y0; and
when the user holds the electronic device with the right hand, the reachable area comprises:
an area formed by coordinate points whose X-axis coordinates range from X0 to X1 and whose Y-axis coordinates range from 0 to Y0;
an area formed by coordinate points whose X-axis coordinates range from X0 to X1 and whose Y-axis coordinates range from 0 to Y1; or
an area formed by coordinate points whose X-axis coordinates range from 0 to X1 and whose Y-axis coordinates range from 0 to Y0, wherein
X0 is an X-axis coordinate value of a coordinate point to which a fingertip of the user is mapped on the display, Y0 is a Y-axis coordinate value of the coordinate point to which the fingertip of the user is mapped on the display, X1 is a length of the display in the X-axis direction, and Y0 is a length of the display in the Y-axis direction.

6. The method according to any one of claims 1 to 4, wherein the reachable area comprises a sector area determined by using a projection of a finger of the user on the display as a radius and using a smearing track generated by the finger of the user on the display as an arc.

7. The method according to any one of claims 1 to 6, wherein the displaying, by the electronic device in a reachable area of the display in response to the first gesture, the interactive interface element displayed in the unreachable area specifically comprises:
moving, by the electronic device, the interactive interface element towards the reachable area of the display in response to the first gesture, so that the interactive interface element is displayed in the reachable area.

8. The method according to any one of claims 1 to 7, wherein
when the electronic device displays, in the reachable area of the display in response to the first gesture, the interactive interface element displayed in the unreachable area, one or more of a spacing between the interactive interface elements, a relative display position, or a display size of the interactive interface element are changed.

9. The method according to any one of claims 1 to 8, wherein before the detecting, by the electronic device when an interactive interface element is displayed in an unreachable area of the display, a first gesture entered on the display, the method further comprises:
outputting, by the electronic device, prompt information when detecting that the user holds the electronic device with one hand, wherein the prompt information is used to prompt the user to enter the first gesture, so as to display, in the reachable area, the interactive interface element displayed in the unreachable area.

10. The method according to any one of claims 1 to 9, wherein after the displaying, by the electronic device in a reachable area of the display in response to the first gesture, the interactive interface element displayed in the unreachable area, the method further comprises:
detecting, by the electronic device, a second gesture entered on the display; and
restoring, by the electronic device in response to the second gesture, the interactive interface element to the unreachable area for display.

11. The method according to any one of claims 1 to 10, wherein
the interactive interface element comprises one or more of the following: a pop-up window, a dialog box, a button, or a tab.

12. An electronic device, wherein the electronic device comprises one or more processors, a memory, and a display;
the memory is coupled to the one or more processors, the memory is configured to store computer program code, the computer program code comprises computer instructions, and the one or more processors invoke the computer instructions, so that the electronic device performs the following operations:
displaying a user interface on the display, wherein the user interface comprises one or more interface elements;
when an interactive interface element is displayed in an unreachable area of the display, detecting a first gesture entered on the display, wherein the interactive interface element is an interface element that receives and responds to a user operation; and
displaying, in a reachable area of the display in response to the first gesture, the interactive interface element displayed in the unreachable area, wherein
the reachable area is an area that can be touched or can be easily touched by a user on the display, and the unreachable area is an area that cannot be touched or cannot be easily touched by the user on the display.

13. The electronic device according to claim 12, wherein the one or more processors are further configured to invoke the computer instructions, so that the electronic device performs the following operations:
after displaying, in the reachable area of the display in response to the first gesture, the interactive interface element displayed in the unreachable area, detecting a user operation performed on the interactive interface element; and
executing, in response to the user operation performed on the interactive interface element, an instruction to implement a function corresponding to the user operation performed on the interactive interface element.

14. The electronic device according to claim 12 or 13, wherein
the first gesture comprises one or more of the following: a continuous sliding gesture that is entered by a finger of the user in a preset area and with a moving distance greater than a threshold, and a touch-and-hold gesture or a heavy press gesture that is entered by a finger of the user in a preset area.

15. The electronic device according to claim 14, wherein
the preset area comprises one or more of the following: an area with a radian on one side or two sides of the display, and a lower left corner area or a lower right corner area of the display.

16. The electronic device according to any one of claims 12 to 15, wherein the reachable area is determined based on a manner in which the user holds the electronic device; and when a lower left corner position of the display is used as an origin (0, 0), a direction from left to right of the display is an X-axis direction, and a direction from bottom to top of the display is a Y-axis direction,
when the user holds the electronic device with the left hand, the reachable area comprises:
an area formed by coordinate points whose X-axis coordinates range from 0 to X0 and whose Y-axis coordinates range from 0 to Y0;
an area formed by coordinate points whose X-axis coordinates range from 0 to X0 and whose Y-axis coordinates range from 0 to Y1; or
an area formed by coordinate points whose X-axis coordinates range from 0 to X1 and whose Y-axis coordinates range from 0 to Y0; and
when the user holds the electronic device with the right hand, the reachable area comprises:
an area formed by coordinate points whose X-axis coordinates range from X0 to X1 and whose Y-axis coordinates range from 0 to Y0;
an area formed by coordinate points whose X-axis coordinates range from X0 to X1 and whose Y-axis coordinates range from 0 to Y1; or
an area formed by coordinate points whose X-axis coordinates range from 0 to X1 and whose Y-axis coordinates range from 0 to Y0, wherein
X0 is an X-axis coordinate value of a coordinate point to which a fingertip of the user is mapped on the display, Y0 is a Y-axis coordinate value of the coordinate point to which the fingertip of the user is mapped on the display, X1 is a length of the display in the X-axis direction, and Y0 is a length of the display in the Y-axis direction.

17. The electronic device according to any one of claims 12 to 15, wherein the reachable area comprises a sector area determined by using a projection of a finger of the user on the display as a radius and using a smearing track generated by the finger of the user on the display as an arc.

18. The electronic device according to any one of claims 12 to 17, wherein the one or more processors are specifically configured to invoke the computer instructions, so that the electronic device performs the following operation:
moving the interactive interface element towards the reachable area of the display in response to the first gesture, so that the interactive interface element is displayed in the reachable area.

19. The electronic device according to any one of claims 12 to 18, wherein the one or more processors are configured to invoke the computer instructions, so that when the electronic device displays, in the reachable area of the display in response to the first gesture, the interactive interface element displayed in the unreachable area, one or more of a spacing between the interactive interface elements, a relative display position, or a display size of the interactive interface element are changed.

20. The electronic device according to any one of claims 12 to 18, wherein the one or more processors are further configured to invoke the computer instructions, so that the electronic device performs the following operation:
before detecting, when the interactive interface element is displayed in the unreachable area of the display, the first gesture entered on the display, outputting prompt information when detecting that the user holds the electronic device with one hand, wherein the prompt information is used to prompt the user to enter the first gesture, so as to display, in the reachable area, the interactive interface element displayed in the unreachable area.

21. The electronic device according to any one of claims 12 to 20, wherein the one or more processors are further configured to invoke the computer instructions, so that the electronic device performs the following operations:
after displaying, in the reachable area of the display in response to the first gesture, the interactive interface element displayed in the unreachable area, detecting a second gesture entered on the display; and
restoring, in response to the second gesture, the interactive interface element to the unreachable area for display.

22. The electronic device according to any one of claims 12 to 21, wherein
the interactive interface element comprises one or more of the following: a pop-up window, a dialog box, a button, or a tab.

23. A computer program product comprising instructions, wherein when the computer program product runs on an electronic device, the electronic device is enabled to perform the method according to any one of claims 1 to 11.

24. A computer-readable storage medium, comprising instructions, wherein when the instructions are run on an electronic device, the electronic device is enabled to perform the method according to any one of claims 1 to 11.
